(19) Europäisches Patentamt
European Patent Office
Office européen des brevets

(11) **EP 3 525 363 B1**

(12) **EUROPEAN PATENT SPECIFICATION**

(45) Date of publication and mention
of the grant of the patent:
**22.09.2021 Bulletin 2021/38**

(21) Application number: **17866018.9**

(22) Date of filing: **29.06.2017**

(51) Int Cl.:
*H04B 7/06* (2006.01)    *H04L 1/06* (2006.01)
*H04L 27/18* (2006.01)    *H04L 27/00* (2006.01)
*H04B 7/0408* (2017.01)

(86) International application number:
**PCT/CN2017/090699**

(87) International publication number:
**WO 2018/076748 (03.05.2018 Gazette 2018/18)**

(54) **SIGNAL TRANSMITION METHOD AND APPARATUS**

VERFAHREN UND VORRICHTUNG ZUR SIGNALÜBERTRAGUNG

PROCÉDÉ ET APPAREIL DE TRANSMISSION DE SIGNAUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.10.2016 CN 201610932993**

(43) Date of publication of application:
**14.08.2019 Bulletin 2019/33**

(73) Proprietor: **Huawei Technologies Co., Ltd.
Longgang District
Shenzhen, Guangdong 518129 (CN)**

(72) Inventors:
• **WU, Tao
Shenzhen
Guangdong 518129 (CN)**

• **CHEN, Teyan
Shenzhen
Guangdong 518129 (CN)**

(74) Representative: **Pfenning, Meinig & Partner mbB
Patent- und Rechtsanwälte
Joachimsthaler Straße 10-12
10719 Berlin (DE)**

(56) References cited:
CN-A- 102 916 783    US-A1- 2007 286 238
US-A1- 2009 116 571    US-A1- 2010 284 491

• YOUNG-HAN NAM ET AL: "Phase-Shift
Cyclic-Delay Diversity for MIMO OFDM Systems",
INTERNATIONAL JOURNAL OF DIGITAL
MULTIMEDIA BROADCASTING, vol. 2010, 1
January 2010 (2010-01-01), pages 1-5,
XP055243436, ISSN: 1687-7578, DOI:
10.1155/2010/684967

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

Embodiments of this application relate to the communications field, and in particular, to a signal transmission method and apparatus.

**BACKGROUND**

A wireless local area network subsystem corresponding to the 802.11ad protocol works at a frequency band of 60 GHz, and is mainly used to transmit wireless high-definition audio and video signals in an internal home network, to provide a more complete high-definition video solution for home multimedia application. The frequency band of 60 GHz may be divided into four channels, and bandwidth of each channel is 2.16 GHz. To improve a transmission throughput, a plurality of channels may be simultaneously used to transmit signals in next-generation 802.11ad. Channel aggregation (Channel Aggregation, CA) is a manner in which signals are transmitted through a plurality of channels. When signals are transmitted in the channel aggregation manner, how to improve signal transmission reliability is a problem that needs to be urgently resolved.

US patent application US 2009,116,571 A1 introduces a transmitter, a receiver and a communication method enabling improvement of the data rate of an MIMO system. One signal x2 out of the three signals is combined with the other two signals x1, x3 respectively to generate two combined signals x1+x2, x2+x3. The combined signals are transmitted through transmission antennas.

US patent application US 2010,284,491 A1 discloses a method and apparatus for obtaining a Symbol Mapping Diversity (SMD), creating a constellation map, and modulating. The operation is derived from multilayer modulation schemes and the superposition/combining of multiple lower-order modulation signals/layers.

US patent application US 2007,286,238 A1 discloses a method of configuring a sub-slot having a layer-modulated multi-user packet (MUP). More specifically, the method comprises modulating symbols associated with a first layer by using non-layered modulation scheme, and modulating symbols associated with a second layer and a third layer using a different layered-modulation scheme.

**SUMMARY**

This application provides a signal transmission method and apparatus, so as to transmit a same signal through different antennas, thereby implementing signal transmission space diversity and improving signal transmission reliability.

The foregoing object is achieved by the features of the independent claims. Additional features of the invention are presented in the dependent claims. In the following, parts of the description and drawings referring to embodiments, which are not covered by the claims are not presented as embodiments of the invention, but as examples useful for understanding the invention.

According to a first aspect, a signal transmission method is provided, including: combining a plurality of lower-order modulation signals into K higher-order modulation signals; and transmitting the K higher-order modulation signals through L antennas, wherein K=4, and L=2; wherein the two antennas comprise a first antenna and a second antenna, the first antenna is corresponding to a first channel and a second channel, the second antenna is corresponding to the first channel and the second channel, and a higher-order modulation signal transmitted on the first channel corresponding to the first antenna and a higher-order modulation signal transmitted on the second channel corresponding to the second antenna are obtained by combining same lower-order modulation signals; wherein the combining a plurality of lower-order modulation signals into K higher-order modulation signals comprises: determining the K higher-order modulation signals based on the plurality of lower-order modulation signals and a channel matrix Q.

According to the signal transmission method in this application, a plurality of lower-order modulation signals are combined into a plurality of higher-order modulation signals, and the plurality of higher-order modulation signals are sent through a plurality of antennas. Therefore, signal transmission space diversity is implemented, and signal transmission reliability and performance of a communications system are improved.

It may be understood that when a transmit end device sends the higher-order modulation signal, the higher-order modulation signal forms a data part of a transmit signal, and a guard interval (Guard Interval, GI) needs to be inserted before and after the data part. The GI may include a Golay (Golay) sequence.

In addition, a length of the higher-order modulation signal is 480 symbols, and a corresponding GI is a 32-bit Golay sequence. Alternatively, a length of the higher-order modulation signal is 384 symbols, and a corresponding GI is a 128-bit Golay sequence. Alternatively, a length of the higher-order modulation signal is 448 symbols, and a corresponding GI is a 64-bit Golay sequence.

With reference to the first aspect, in a first possible implementation of the first aspect, the plurality of lower-order modulation signals are corresponding to a plurality of receive end devices, and a plurality of lower-order modulation signals combined into a same higher-order modulation signal are corresponding to different receive end devices.

In other words, the lower-order modulation signals combined into the higher-order modulation signals include lower-order modulation signals sent to a plurality of receive end devices, and the plurality of lower-order modulation signals combined into the same higher-order modulation signal are corresponding to the different receive end devices. Therefore, higher-order modulation signals transmitted on a same channel include lower-order modulation signals sent to a plurality of receive end devices, thereby improving spectrum utilization efficiency.

With reference to the first aspect or the first possible implementation of the first aspect, in a second possible implementation of the first aspect, the transmitting the K higher-order modulation signals through L antennas includes: performing phase shift processing on each higher-order modulation signal to obtain K phase-shifted higher-order modulation signals, where a phase shift factor for the phase shift processing is $e^{j\frac{\pi}{2}k}$ , k is a number of each higher-order modulation signal, and $k$=1, 2, ..., and K; and transmitting the K phase-shifted higher-order modulation signals through the L antennas.

Alternatively, it may be understood that each higher-order modulation signal is multiplied by a phase shift factor corresponding to the higher-order modulation signal to obtain a phase-shifted higher-order modulation signal.

Correspondingly, each GI is multiplied by a phase shift factor corresponding to the GI to obtain a phase-shifted GI. A transmit signal sent by the transmit end device includes the phase-shifted higher-order modulation signal and the phase-shifted GI.

Because the higher-order modulation signal transmitted on the first channel corresponding to the first antenna and the higher-order modulation signal transmitted on the second channel corresponding to the second antenna are obtained by combining the same lower-order modulation signals, frequency domain diversity can be further provided, and signal transmission reliability and performance of a communications system can be further improved.

The plurality of lower-order modulation signals may be combined into the K higher-order modulation signals in a matrix multiplication manner. Therefore, an implementation of a transmitter can be simplified.

In a sixth possible implementation of the first aspect, the plurality of lower-order modulation signals are binary phase shift keying BPSK signals, and the K higher-order modulation signals are quadrature phase shift keying QPSK signals.

With reference to the sixth possible implementation of the first aspect, in a seventh possible implementation of the first aspect, the matrix Q is one of the following matrices:

$$\mathbf{Q} = \tfrac{1}{\sqrt{2}} \begin{bmatrix} 1 & j \\ 1 & j \end{bmatrix},$$

$$\mathbf{Q} = \tfrac{1}{\sqrt{2}} \begin{bmatrix} 1 & j \\ 1 & -j \end{bmatrix},$$

$$\mathbf{Q} = \tfrac{1}{\sqrt{2}} \begin{bmatrix} 1 & j \\ -1 & j \end{bmatrix},$$

$$\mathbf{Q} = \tfrac{1}{\sqrt{2}} \begin{bmatrix} 1 & j \\ -1 & -j \end{bmatrix},$$

$$\mathbf{Q} = \tfrac{1}{\sqrt{2}} \begin{bmatrix} 1 & -j \\ 1 & j \end{bmatrix},$$

$$\mathbf{Q} = \tfrac{1}{\sqrt{2}} \begin{bmatrix} 1 & -j \\ 1 & -j \end{bmatrix},$$

$$\mathbf{Q} = \frac{1}{\sqrt{2}} \begin{bmatrix} 1 & -j \\ -1 & j \end{bmatrix},$$

$$\mathbf{Q} = \frac{1}{\sqrt{2}} \begin{bmatrix} 1 & -j \\ -1 & -j \end{bmatrix},$$

$$\mathbf{Q} = \frac{1}{\sqrt{2}} \begin{bmatrix} -1 & j \\ 1 & j \end{bmatrix},$$

$$\mathbf{Q} = \frac{1}{\sqrt{2}} \begin{bmatrix} -1 & j \\ 1 & -j \end{bmatrix},$$

$$\mathbf{Q} = \frac{1}{\sqrt{2}} \begin{bmatrix} -1 & j \\ -1 & j \end{bmatrix},$$

$$\mathbf{Q} = \frac{1}{\sqrt{2}} \begin{bmatrix} -1 & j \\ -1 & -j \end{bmatrix},$$

$$\mathbf{Q} = \frac{1}{\sqrt{2}} \begin{bmatrix} -1 & -j \\ 1 & j \end{bmatrix},$$

$$\mathbf{Q} = \frac{1}{\sqrt{2}} \begin{bmatrix} -1 & -j \\ 1 & -j \end{bmatrix},$$

$$\mathbf{Q} = \frac{1}{\sqrt{2}} \begin{bmatrix} -1 & -j \\ -1 & j \end{bmatrix},$$

and

$$\mathbf{Q} = \frac{1}{\sqrt{2}} \begin{bmatrix} -1 & -j \\ -1 & -j \end{bmatrix}.$$

In an eighth possible implementation of the first aspect, the plurality of lower-order modulation signals are QPSK signals, and the K higher-order modulation signals are 16-quadrature amplitude modulation QAM signals.
With reference to the eighth possible implementation of the first aspect, in a ninth possible implementation of the first aspect, the matrix Q is one of the following matrices:

$$\mathbf{Q} = \frac{1}{\sqrt{5}} \begin{bmatrix} 1 & 2 \\ 1 & 2 \end{bmatrix},$$

$$\mathbf{Q} = \frac{1}{\sqrt{5}} \begin{bmatrix} 1 & 2 \\ -1 & 2 \end{bmatrix},$$

$$\mathbf{Q} = \frac{1}{\sqrt{5}} \begin{bmatrix} 1 & 2 \\ 2 & 1 \end{bmatrix},$$

$$Q = \frac{1}{\sqrt{5}} \begin{bmatrix} 1 & 2 \\ -2 & 1 \end{bmatrix},$$

$$Q = \frac{1}{\sqrt{5}} \begin{bmatrix} -1 & 2 \\ 1 & 2 \end{bmatrix},$$

$$Q = \frac{1}{\sqrt{5}} \begin{bmatrix} -1 & 2 \\ -1 & 2 \end{bmatrix},$$

$$Q = \frac{1}{\sqrt{5}} \begin{bmatrix} -1 & 2 \\ 2 & 1 \end{bmatrix},$$

$$Q = \frac{1}{\sqrt{5}} \begin{bmatrix} -1 & 2 \\ -2 & 1 \end{bmatrix},$$

$$Q = \frac{1}{\sqrt{5}} \begin{bmatrix} 2 & 1 \\ 1 & 2 \end{bmatrix},$$

$$Q = \frac{1}{\sqrt{5}} \begin{bmatrix} 2 & 1 \\ -1 & 2 \end{bmatrix},$$

$$Q = \frac{1}{\sqrt{5}} \begin{bmatrix} 2 & 1 \\ 2 & 1 \end{bmatrix},$$

$$Q = \frac{1}{\sqrt{5}} \begin{bmatrix} 2 & 1 \\ -2 & 1 \end{bmatrix},$$

$$Q = \frac{1}{\sqrt{5}} \begin{bmatrix} -2 & 1 \\ 1 & 2 \end{bmatrix},$$

$$Q = \frac{1}{\sqrt{5}} \begin{bmatrix} -2 & 1 \\ -1 & 2 \end{bmatrix},$$

$$Q = \frac{1}{\sqrt{5}} \begin{bmatrix} -2 & 1 \\ 2 & 1 \end{bmatrix},$$

and

$$Q = \frac{1}{\sqrt{5}} \begin{bmatrix} -2 & 1 \\ -2 & 1 \end{bmatrix}.$$

With reference to the fifth possible implementation of the first aspect, in a tenth possible implementation of the first aspect, the plurality of lower-order modulation signals are QPSK signals, and the K higher-order modulation signals are 16-amplitude phase shift keying APSK signals.

With reference to the tenth possible implementation of the first aspect, in an eleventh possible implementation of the first aspect, the matrix Q is one of the following matrices:

$$Q = \frac{1}{\sqrt{2}} \begin{bmatrix} 1 & e^{j\theta} \\ 1 & e^{j\theta} \end{bmatrix},$$

$$Q = \frac{1}{\sqrt{2}} \begin{bmatrix} 1 & e^{j\theta} \\ 1 & -e^{j\theta} \end{bmatrix},$$

$$Q = \frac{1}{\sqrt{2}} \begin{bmatrix} 1 & e^{j\theta} \\ -1 & e^{j\theta} \end{bmatrix},$$

$$Q = \frac{1}{\sqrt{2}} \begin{bmatrix} 1 & e^{j\theta} \\ -1 & -e^{j\theta} \end{bmatrix},$$

$$Q = \frac{1}{\sqrt{2}} \begin{bmatrix} 1 & -e^{j\theta} \\ 1 & e^{j\theta} \end{bmatrix},$$

$$Q = \frac{1}{\sqrt{2}} \begin{bmatrix} 1 & -e^{j\theta} \\ 1 & -e^{j\theta} \end{bmatrix},$$

$$Q = \frac{1}{\sqrt{2}} \begin{bmatrix} 1 & -e^{j\theta} \\ -1 & e^{j\theta} \end{bmatrix},$$

$$Q = \frac{1}{\sqrt{2}} \begin{bmatrix} 1 & -e^{j\theta} \\ -1 & -e^{j\theta} \end{bmatrix},$$

$$Q = \frac{1}{\sqrt{2}} \begin{bmatrix} -1 & e^{j\theta} \\ 1 & e^{j\theta} \end{bmatrix},$$

$$Q = \frac{1}{\sqrt{2}} \begin{bmatrix} -1 & e^{j\theta} \\ 1 & -e^{j\theta} \end{bmatrix},$$

$$Q = \frac{1}{\sqrt{2}} \begin{bmatrix} -1 & e^{j\theta} \\ -1 & e^{j\theta} \end{bmatrix},$$

$$Q = \frac{1}{\sqrt{2}} \begin{bmatrix} 1 & -e^{j\theta} \\ -1 & -e^{j\theta} \end{bmatrix},$$

$$Q = \frac{1}{\sqrt{2}} \begin{bmatrix} -1 & -e^{j\theta} \\ 1 & e^{j\theta} \end{bmatrix},$$

$$Q = \frac{1}{\sqrt{2}} \begin{bmatrix} -1 & -e^{j\theta} \\ 1 & -e^{j\theta} \end{bmatrix},$$

$$\mathbf{Q} = \frac{1}{\sqrt{2}} \begin{bmatrix} -1 & -e^{j\theta} \\ -1 & e^{j\theta} \end{bmatrix},$$

and

$$\mathbf{Q} = \frac{1}{\sqrt{2}} \begin{bmatrix} -1 & -e^{j\theta} \\ -1 & -e^{j\theta} \end{bmatrix}.$$

With reference to the eleventh possible implementation of the first aspect, in a twelfth possible implementation of the first aspect, a value of θ is one of the following values: $\pi/4$, $3\pi/4$; $-\pi/4$, and $-3\pi/4$.

In a thirteenth possible implementation of the first aspect, channel bandwidth of the first channel and/or the second channel is an integer multiple of 2.16 GHz.

In all the foregoing embodiments, when sending higher-order modulation signals through a plurality of channels corresponding to each antenna, the transmit end device first converts the higher-order modulation signal into an analog signal, determines a product of each analog signal and a carrier frequency signal on a corresponding channel as a radio frequency signal, and then sends the radio frequency signal through the channel.

Converting the higher-order modulation signal into the analog signal may be specifically performing filtering processing on the higher-order modulation signal, and then performing digital-to-analog (D/A) conversion on a digital signal obtained after the filtering processing, to obtain the analog signal.

Optionally, in actual sending, radio frequency signals on the plurality of channels are added to obtain a radio frequency signal obtained through addition, and the transmit end device sends, by using the transmitter, the radio frequency signal obtained through addition.

According to a second aspect, a signal transmission apparatus is provided, including: a processor, configured to combine a plurality of lower-order modulation signals into K higher-order modulation signals; and a transmitter, configured to transmit the K higher-order modulation signals through L antennas, wherein K=4, and L=2; wherein the two antennas comprise a first antenna and a second antenna, the first antenna is corresponding to a first channel and a second channel, the second antenna is corresponding to the first channel and the second channel, and a higher-order modulation signal transmitted on the first channel corresponding to the first antenna and a higher-order modulation signal transmitted on the second channel corresponding to the second antenna are obtained by combining same lower-order modulation signals;wherein the processor is specifically configured to:determine the K higher-order modulation signals based on the plurality of lower-order modulation signals and a channel matrix Q.

According to the signal transmission apparatus in this application, a plurality of lower-order modulation signals are combined into a plurality of higher-order modulation signals, and the plurality of higher-order modulation signals are sent through a plurality of antennas. Therefore, signal transmission space diversity is implemented, and signal transmission reliability and performance of a communications system are improved.

With reference to the second aspect, in a first possible implementation of the second aspect, the plurality of lower-order modulation signals are corresponding to a plurality of receive end devices, and a plurality of lower-order modulation signals combined into a same higher-order modulation signal are corresponding to different receive end devices.

With reference to the second aspect or the first possible implementation of the second aspect, in a second possible implementation of the second aspect, the processing unit is further configured to perform phase shift processing on each higher-order modulation signal to obtain K phase-shifted higher-order modulation signals, where a phase shift factor for the phase shift processing is $e^{j\frac{\pi}{2}k}$, k is a number of each higher-order modulation signal, and $k$=1, 2, ..., and K; and

the sending unit is specifically configured to transmit the K phase-shifted higher-order modulation signals through the L antennas.

With reference to the second aspect, in a fourth possible implementation of the second aspect, the two antennas include a first antenna and a second antenna, the first antenna is corresponding to a first channel and a second channel, the second antenna is corresponding to the first channel and the second channel, and a higher-order modulation signal transmitted on the first channel corresponding to the first antenna and a higher-order modulation signal transmitted on the second channel corresponding to the second antenna are obtained by combining same lower-order modulation signals.

With reference to the second aspect, in a sixth possible implementation of the second aspect, the plurality of lower-order modulation signals are binary phase shift keying BPSK signals, and the K higher-order modulation signals are quadrature phase shift keying QPSK signals.

With reference to the sixth possible implementation of the second aspect, in a seventh possible implementation of the second aspect, the matrix Q is one of the following matrices:

$$\mathbf{Q} = \frac{1}{\sqrt{2}} \begin{bmatrix} 1 & j \\ 1 & j \end{bmatrix},$$

$$\mathbf{Q} = \frac{1}{\sqrt{2}} \begin{bmatrix} 1 & j \\ 1 & -j \end{bmatrix},$$

$$\mathbf{Q} = \frac{1}{\sqrt{2}} \begin{bmatrix} 1 & j \\ -1 & j \end{bmatrix},$$

$$\mathbf{Q} = \frac{1}{\sqrt{2}} \begin{bmatrix} 1 & j \\ -1 & -j \end{bmatrix},$$

$$\mathbf{Q} = \frac{1}{\sqrt{2}} \begin{bmatrix} 1 & -j \\ 1 & j \end{bmatrix},$$

$$\mathbf{Q} = \frac{1}{\sqrt{2}} \begin{bmatrix} 1 & -j \\ 1 & -j \end{bmatrix},$$

$$\mathbf{Q} = \frac{1}{\sqrt{2}} \begin{bmatrix} 1 & -j \\ -1 & j \end{bmatrix},$$

$$\mathbf{Q} = \frac{1}{\sqrt{2}} \begin{bmatrix} 1 & -j \\ -1 & -j \end{bmatrix},$$

$$\mathbf{Q} = \frac{1}{\sqrt{2}} \begin{bmatrix} -1 & j \\ 1 & j \end{bmatrix},$$

$$\mathbf{Q} = \frac{1}{\sqrt{2}} \begin{bmatrix} -1 & j \\ 1 & -j \end{bmatrix},$$

$$\mathbf{Q} = \frac{1}{\sqrt{2}} \begin{bmatrix} -1 & j \\ -1 & j \end{bmatrix},$$

$$\mathbf{Q} = \frac{1}{\sqrt{2}} \begin{bmatrix} -1 & j \\ -1 & -j \end{bmatrix},$$

$$\mathbf{Q} = \frac{1}{\sqrt{2}} \begin{bmatrix} -1 & -j \\ 1 & j \end{bmatrix},$$

$$Q = \frac{1}{\sqrt{2}} \begin{bmatrix} -1 & -j \\ 1 & -j \end{bmatrix} \quad ,$$

$$Q = \frac{1}{\sqrt{2}} \begin{bmatrix} -1 & -j \\ -1 & j \end{bmatrix} \quad ,$$

and

$$Q = \frac{1}{\sqrt{2}} \begin{bmatrix} -1 & -j \\ -1 & -j \end{bmatrix}.$$

With reference to the second aspect, in an eighth possible implementation of the second aspect, the plurality of lower-order modulation signals are QPSK signals, and the K higher-order modulation signals are 16-quadrature amplitude modulation QAM signals.

With reference to the second aspect, in a ninth possible implementation of the second aspect, the matrix Q is one of the following matrices:

$$Q = \frac{1}{\sqrt{5}} \begin{bmatrix} 1 & 2 \\ 1 & 2 \end{bmatrix},$$

$$Q = \frac{1}{\sqrt{5}} \begin{bmatrix} 1 & 2 \\ -1 & 2 \end{bmatrix},$$

$$Q = \frac{1}{\sqrt{5}} \begin{bmatrix} 1 & 2 \\ 2 & 1 \end{bmatrix},$$

$$Q = \frac{1}{\sqrt{5}} \begin{bmatrix} 1 & 2 \\ -2 & 1 \end{bmatrix},$$

$$Q = \frac{1}{\sqrt{5}} \begin{bmatrix} -1 & 2 \\ 1 & 2 \end{bmatrix},$$

$$Q = \frac{1}{\sqrt{5}} \begin{bmatrix} -1 & 2 \\ -1 & 2 \end{bmatrix},$$

$$Q = \frac{1}{\sqrt{5}} \begin{bmatrix} -1 & 2 \\ 2 & 1 \end{bmatrix},$$

$$Q = \frac{1}{\sqrt{5}} \begin{bmatrix} -1 & 2 \\ -2 & 1 \end{bmatrix},$$

$$Q = \frac{1}{\sqrt{5}} \begin{bmatrix} 2 & 1 \\ 1 & 2 \end{bmatrix},$$

$$Q = \frac{1}{\sqrt{5}} \begin{bmatrix} 2 & 1 \\ -1 & 2 \end{bmatrix},$$

$$Q = \frac{1}{\sqrt{5}} \begin{bmatrix} 2 & 1 \\ 2 & 1 \end{bmatrix},$$

$$Q = \frac{1}{\sqrt{5}} \begin{bmatrix} 2 & 1 \\ -2 & 1 \end{bmatrix},$$

$$Q = \frac{1}{\sqrt{5}} \begin{bmatrix} -2 & 1 \\ 1 & 2 \end{bmatrix},$$

$$Q = \frac{1}{\sqrt{5}} \begin{bmatrix} -2 & 1 \\ -1 & 2 \end{bmatrix},$$

$$Q = \frac{1}{\sqrt{5}} \begin{bmatrix} -2 & 1 \\ 2 & 1 \end{bmatrix},$$

and

$$Q = \frac{1}{\sqrt{5}} \begin{bmatrix} -2 & 1 \\ -2 & 1 \end{bmatrix}.$$

With reference to the second aspect, in a tenth possible implementation of the second aspect, the plurality of lower-order modulation signals are QPSK signals, and the K higher-order modulation signals are 16-amplitude phase shift keying APSK signals.

With reference to the tenth possible implementation of the second aspect, in an eleventh possible implementation of the second aspect, the matrix Q is one of the following matrices:

$$Q = \frac{1}{\sqrt{2}} \begin{bmatrix} 1 & e^{j\theta} \\ 1 & e^{j\theta} \end{bmatrix},$$

$$Q = \frac{1}{\sqrt{2}} \begin{bmatrix} 1 & e^{j\theta} \\ 1 & -e^{j\theta} \end{bmatrix},$$

$$Q = \frac{1}{\sqrt{2}} \begin{bmatrix} 1 & e^{j\theta} \\ -1 & e^{j\theta} \end{bmatrix},$$

$$Q = \frac{1}{\sqrt{2}} \begin{bmatrix} 1 & e^{j\theta} \\ -1 & -e^{j\theta} \end{bmatrix},$$

$$Q = \frac{1}{\sqrt{2}} \begin{bmatrix} 1 & -e^{j\theta} \\ 1 & e^{j\theta} \end{bmatrix},$$

$$\mathbf{Q} = \frac{1}{\sqrt{2}} \begin{bmatrix} 1 & -e^{j\theta} \\ 1 & -e^{j\theta} \end{bmatrix},$$

$$\mathbf{Q} = \frac{1}{\sqrt{2}} \begin{bmatrix} 1 & -e^{j\theta} \\ -1 & e^{j\theta} \end{bmatrix},$$

$$\mathbf{Q} = \frac{1}{\sqrt{2}} \begin{bmatrix} 1 & -e^{j\theta} \\ -1 & -e^{j\theta} \end{bmatrix},$$

$$\mathbf{Q} = \frac{1}{\sqrt{2}} \begin{bmatrix} -1 & e^{j\theta} \\ 1 & e^{j\theta} \end{bmatrix},$$

$$\mathbf{Q} = \frac{1}{\sqrt{2}} \begin{bmatrix} -1 & e^{j\theta} \\ 1 & -e^{j\theta} \end{bmatrix},$$

$$\mathbf{Q} = \frac{1}{\sqrt{2}} \begin{bmatrix} -1 & e^{j\theta} \\ -1 & e^{j\theta} \end{bmatrix},$$

$$\mathbf{Q} = \frac{1}{\sqrt{2}} \begin{bmatrix} 1 & -e^{j\theta} \\ -1 & -e^{j\theta} \end{bmatrix},$$

$$\mathbf{Q} = \frac{1}{\sqrt{2}} \begin{bmatrix} -1 & -e^{j\theta} \\ 1 & e^{j\theta} \end{bmatrix},$$

$$\mathbf{Q} = \frac{1}{\sqrt{2}} \begin{bmatrix} -1 & -e^{j\theta} \\ 1 & -e^{j\theta} \end{bmatrix},$$

$$\mathbf{Q} = \frac{1}{\sqrt{2}} \begin{bmatrix} -1 & -e^{j\theta} \\ -1 & e^{j\theta} \end{bmatrix},$$

and

$$\mathbf{Q} = \frac{1}{\sqrt{2}} \begin{bmatrix} -1 & -e^{j\theta} \\ -1 & -e^{j\theta} \end{bmatrix}.$$

With reference to the eleventh possible implementation of the second aspect, in a twelfth possible implementation of the second aspect, a value of θ is one of the following values: π/4, 3π/4; -π/4, and -3π/4.

With reference to the second aspect, in a thirteenth possible implementation of the second aspect, channel bandwidth of the first channel and/or the second channel is an integer multiple of 2.16 GHz.

**BRIEF DESCRIPTION OF DRAWINGS**

FIG. 1 is a schematic diagram of channel division according to an embodiment of this application;
FIG. 2 is a schematic diagram of an application scenario according to an embodiment of this application;
FIG. 3 is a schematic diagram of internal structures of a base station and user equipment in the application scenario in FIG. 2;
FIG. 4 is a constellation diagram of QPSK modulation;
FIG. 5 is a schematic diagram of a channel aggregation implementation principle according to an embodiment of this application;
FIG. 6 is a schematic flowchart of a signal transmission method according to an embodiment of this application;
FIG. 7 is a schematic diagram of a signal transmission method according to a specific embodiment of this application;
FIG. 8 is a schematic diagram of an interleaved grouping method according to an embodiment of this application;
FIG. 9 is a schematic diagram of a continuous grouping method according to an embodiment of this application;
FIG. 10 is a schematic diagram of a signal transmission method according to another specific embodiment of this application;
FIG. 11 is a schematic diagram of a signal transmission method according to still another specific embodiment of this application;
FIG. 12 is a schematic diagram of a signal transmission method according to still another specific embodiment of this application;
FIG. 13 is a schematic diagram of a signal transmission method according to still another specific embodiment of this application;
FIG. 14 is a schematic diagram of a signal transmission method according to still another specific embodiment of this application;
FIG. 15 is a schematic block diagram of a signal transmission apparatus according to an embodiment of this application; and
FIG. 16 is a schematic block diagram of a signal transmission apparatus according to another embodiment of this application.

## DESCRIPTION OF EMBODIMENTS

The following clearly and completely describes the technical solutions in the embodiments of this application with reference to the accompanying drawings in the embodiments of this application.

The technical solutions in the embodiments of this application may be applied to various suitable communications systems, for example, a Long Term Evolution (Long Term Evolution, LTE) system, an LTE frequency division duplex (Frequency Division Duplex, FDD) system, an LTE time division duplex (Time Division Duplex, TDD) system, a future network such as a 5G network, a device to device (Device to Device, D2D) system, and a machine to machine (Machine to Machine, M2M) system.

In the embodiments of this application, a station may also be referred to as user equipment (User Equipment, UE), a terminal device (Terminal Device), a mobile station (Mobile Station, MS), a mobile terminal (Mobile Terminal), or the like. The station may communicate with one or more core networks by using a radio access network (Radio Access Network, "RAN" for short). For example, the station may be a mobile phone (or referred to as a "cellular" phone), or a computer with a mobile terminal. For example, the station may be a portable, pocket-sized, handheld, computer built-in, or in-vehicle mobile apparatus, a terminal device in a future 5G network, or a terminal device in a future evolved public land mobile network (Public Land Mobile Network, PLMN).

In the embodiments of this application, an access point may be a base station, for example, may be an evolved NodeB (evolved NodeB, eNB, or e-NodeB) in a radio access network in an LTE system, or a base station in a radio access network in a future communications system. This is not limited in this application.

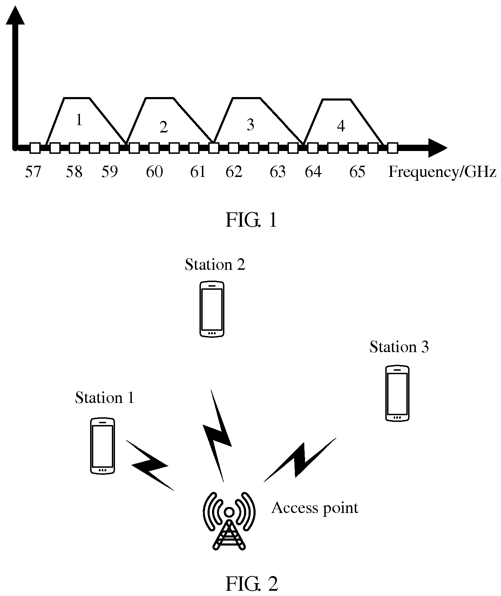

It should be noted that, as shown in FIG. 1, a channel in the embodiments of this application is four channels obtained by dividing a free-of-charge frequency band of 60 GHz or a channel obtained by binding some of the four channels. As shown in FIG. 1, the four channels obtained by dividing the free-of-charge frequency band of 60 GHz are respectively corresponding to numbers 1, 2, 3, and 4 in FIG. 1, bandwidth of the four channels is 2.16 GHz, and corresponding center frequencies are respectively 58.320 GHz, 60.480 GHz, 62.640 GHz, and 64.800 GHz. Alternatively, it may be understood that the bandwidth of the channel in the embodiments of this application is an integer multiple of 2.16 GHz, for example, 2.16 GHz or 4.32 GHz.

FIG. 2 is a schematic diagram of an application scenario according to an embodiment of this application. As shown in FIG. 2, an access point (Access Point, AP) communicates with a plurality of stations (a station 1 to a station 3) by using a radio signal. The radio signal used for communication is usually sent and received in a modulation manner. The modulation manner may be classified into two categories: single-carrier modulation and multi-carrier modulation.

It should be noted that only one AP (isolated AP) is shown in the application scenario shown in FIG. 2. However, this application is not limited thereto. The AP may further have a neighboring AP and a station that transmit services on a same or different time-frequency resource, and another quantity of stations may be further included in a coverage area of each AP.

Optionally, a wireless communications system in which the AP and the station are located in FIG. 2 may further include other network entities such as a network controller and a mobility management entity. This embodiment of this application is not limited thereto.

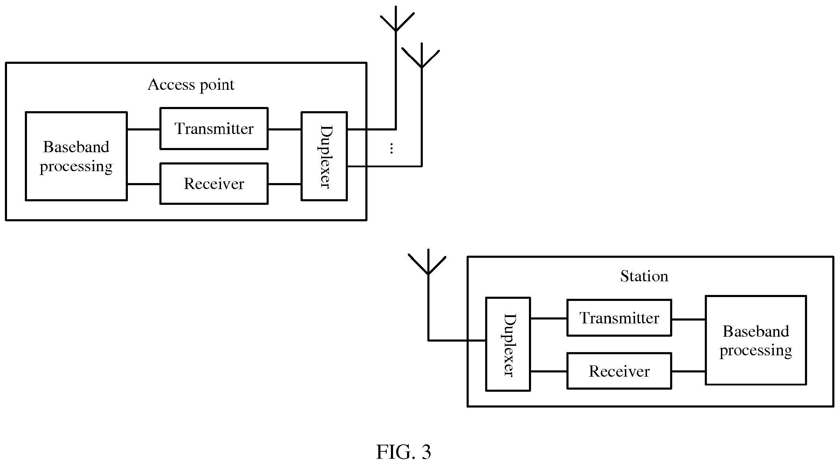

FIG. 3 is a schematic diagram of internal structures of the access point and the station in the application scenario shown in FIG. 2. As shown in FIG. 3, the access point may include an antenna or an antenna array, a duplexer, a transmitter (Transmitter, TX), a receiver (Receiver, RX) (the TX and the RX may be collectively referred to as a transceiver TRX), and a baseband processing part. The duplexer is configured to enable the antenna or the antenna array to send and receive a signal. The TX is configured to implement conversion between a radio frequency signal and a baseband signal. The TX may usually include a power amplifier (Power Amplifier, PA), a digital-to-analog converter (Digital-to-Analog Converter, DAC), and a frequency converter. The PA generally works within a specific linear range, and when input signal amplitude is significantly changed, the PA works in a non-linear range, thereby reducing efficiency of the PA. The RX may usually include a low-noise amplifier (Low-Noise Amplifier, LNA), an analog-to-digital converter (Analog-to-Digital Converter, ADC), and a frequency converter. The baseband processing part is configured to: implement processing of a sent or received signal, such as layer mapping, precoding, modulation/demodulation, and encoding/decoding, and perform separate processing on a physical control channel, a physical data channel, a physical broadcast channel, a reference signal, and the like.

In an example, the access point may further include a control part, configured to perform multi-user scheduling, resource allocation, pilot scheduling, user physical layer parameter configuration, and the like.

The station may include an antenna, a duplexer, a TX, an RX (the TX and the RX may be collectively referred to as a transceiver TRX), and a baseband processing part. As shown in FIG. 3, the station includes one antenna. It should be understood that the station may alternatively include a plurality of antennas (namely, an antenna array). The duplexer enables the antenna or the antenna array to send and receive a signal. The TX is configured to implement conversion between a radio frequency signal and a baseband signal. The TX may usually include a PA, a DAC, and a frequency converter. Because the station is powered by a battery, the station is more sensitive to power amplification efficiency of the PA. The RX may usually include an LNA, an ADC, and a frequency converter. The baseband processing part is configured to: implement processing of a sent or received signal, such as layer mapping, precoding, modulation/demodulation, and encoding/decoding, and perform separate processing on a physical control channel, a physical data channel, a physical broadcast channel, a reference signal, and the like.

In an example, the station may further include a control part, configured to: request an uplink physical resource, compute channel state information (Channel State Information, CSI) corresponding to a downlink channel, determine whether a downlink data packet is successfully received, and so on.

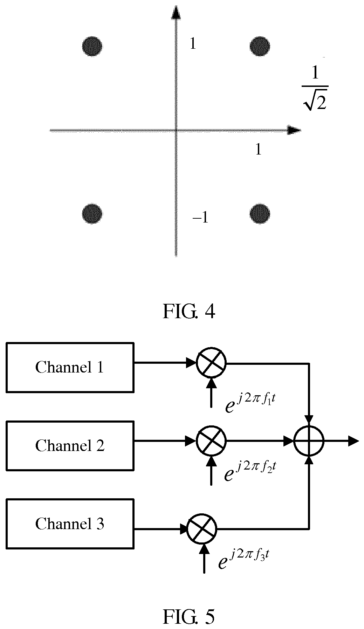

To facilitate understanding of the embodiments of this application, a principle of combining a plurality of lower-order modulation signals into higher-order modulation signals is first described herein. As shown in FIG. 4, that the lower-order modulation signals are binary phase shift keying (Binary Phase Shift Keying, BPSK) signals and the higher-order modulation signal is a quadrature phase shift keying (Quadrature Phase Shift Keying, QPSK) signal is used as an example. One QPSK signal may be divided into a combination of two BPSK signals. It may be learned from FIG. 4 that a value of the QPSK signal x may be as follows: $\{\frac{1}{\sqrt{2}}(1+j), \frac{1}{\sqrt{2}}(1-j), \frac{1}{\sqrt{2}}(-1+j), \frac{1}{\sqrt{2}}(-1-j)\}$. The QPSK signal x may be considered as a combination of two BPSK signals $s_1$ and $s_2$, values of $s_1$ and $s_2$ are {1,-1}, and a specific combination manner is represented as $x=\frac{1}{\sqrt{2}}(\alpha s_1 + \beta s_2)$. Values of $\alpha$ and $\beta$ are shown in Table 1.

**Table 1**

|  | $\alpha$ | $\beta$ |
|---|---|---|
| Combination 1 | 1 | $j$ |
| Combination 2 | 1 | $-j$ |

Next, a channel aggregation (Channel Aggregation) implementation principle is described. As shown in FIG. 5, three channels (channels 1, 2, and 3) are used as an example. When a transmit end device sends signals, a signal on each channel is encoded and modulated, and then is multiplied by a corresponding carrier frequency signal $e^{j2\pi f_n t}$ to obtain a radio frequency signal corresponding to each channel, where n=1, 2, and 3, and $f_n$ is a center frequency of the channel, and a transmitter superposes radio frequency signals from different channels, and then sends the signals.

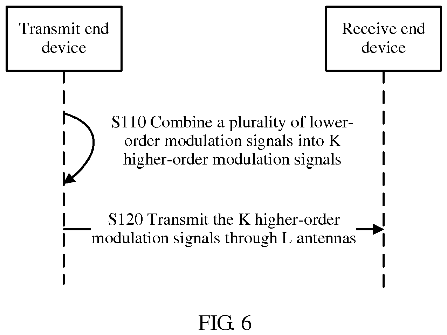

FIG. 6 is a schematic flowchart of a signal transmission method according to an embodiment of this application. The method may be performed by a transmit end device. The transmit end device may be the access point or the station described above. As shown in FIG. 6, the method 100 includes the following steps.

S110. Combine a plurality of lower-order modulation signals into K higher-order modulation signals.

S220. Transmit the K higher-order modulation signals through L antennas.

A higher-order modulation signal transmitted on an $i^{th}$ channel corresponding to an $m^{th}$ antenna in the L antennas and a higher-order modulation signal transmitted on a $j^{th}$ channel corresponding to an $n^{th}$ antenna are obtained by combining same lower-order modulation signals, where K is equal to 4, L is equal to 2, m and n are positive integers less than or equal to L, m≠n, and i and j are positive integers.

Therefore, according to the signal transmission method in this embodiment of this application, the transmit end device combines a plurality of lower-order modulation signals into a plurality of higher-order modulation signals, and sends the plurality of higher-order modulation signals through a plurality of antennas. Therefore, signal transmission space diversity is implemented, and signal transmission reliability and performance of a communications system are improved.

It should be noted that when the transmit end device sends the higher-order modulation signal, the higher-order modulation signal forms a data part of a transmit signal, and a guard interval (Guard Interval, GI) needs to be inserted before and after the data part. The GI may include a Golay (Golay) sequence.

Optionally, in an embodiment, the plurality of lower-order modulation signals in S110 are sent to a same receive end device. Alternatively, it may be understood that the plurality of lower-order modulation signals in S110 are corresponding to one receive end device.

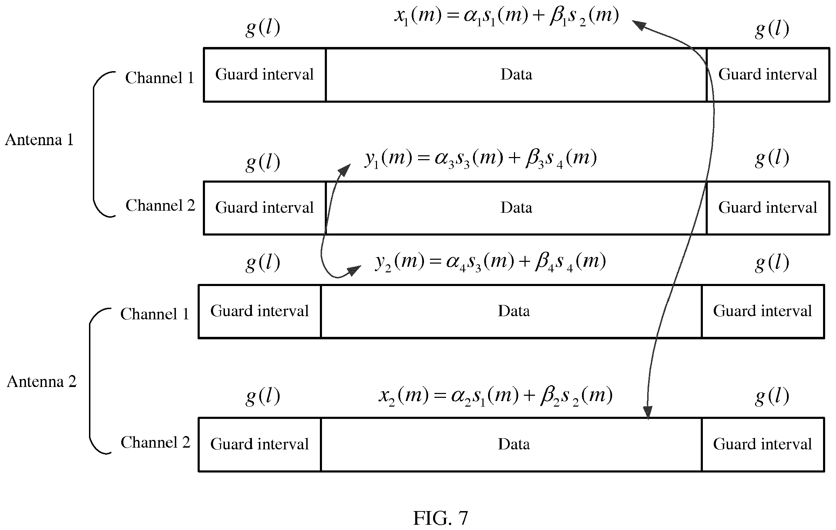

K=4 and L=2 are used to describe, in detail, the signal transmission method according to this embodiment of this application. As shown in FIG. 7, the transmit end device sends signals to the receive end device through an antenna 1 and an antenna 2. The antenna 1 is corresponding to a channel 1 and a channel 2, and the antenna 2 is also corresponding to the channel 1 and the channel 2. There are four lower-order modulation signals: $s_1(m)$, $s_2(m)$, $s_3(m)$, and $s_4(m)$, and four higher-order modulation signals: $x_1(m)$, $x_2(m)$, $y_1(m)$, and $y_2(m)$, where $m$=0, 1, ..., and $M$-1, and $M$ is a length that is of a data part and that is stipulated in a protocol. It may be learned that each higher-order modulation signal includes $M$ higher-order modulation symbols. The transmit end device determines that a guard signal that forms a guard interval is $g(l)$, where $l$=0, 1, ..., and $G$-1, and G is a length that is of a guard sequence and that is stipulated in the protocol. In addition, $g(l)$ may be modulated in a manner such as binary phase shift keying (Binary Phase Shift Keying, BPSK), quadrature phase shift keying (Quadrature Phase Shift Keying, QPSK), or 16-quadrature amplitude modulation (Quadrature Amplitude Modulation, QAM).

In this embodiment of this application, optionally, $M$=480, and $G$=32; $M$=384, and $G$=128; or $M$=448, and $G$=64.

Specifically, when combining the plurality of lower-order modulation signals into the four higher-order modulation signals, the transmit end device obtains the higher-order modulation signals by multiplying a matrix Q by a matrix formed by the lower-order modulation signals, where the matrix Q may be represented as $Q = \begin{bmatrix} \alpha_1 & \beta_1 \\ \alpha_2 & \beta_2 \end{bmatrix}$ or $Q = \begin{bmatrix} \alpha_3 & \beta_4 \\ \alpha_4 & \beta_4 \end{bmatrix}$. Therefore, it may be concluded that $x_1(m) = (\alpha_1 s_1(m) + \beta_1 s_2(m))$, $x_2(m) = \alpha_2 s_1(m) + \beta_2 s_2(m)$, $y_1(m) = \alpha_3 s_3(m) + \beta_3 s_4(m)$, and $y_2(m) = \alpha_4 s_3(m) + \beta_4 s_4(m)$.

Optionally, a specific implementation in which the lower-order modulation signals are combined into the higher-order modulation signals may be agreed upon by the transmit end device and the receive end device in advance. Alternatively, the transmit end device notifies, by displaying an indication, the receive end device of a specific implementation in which the lower-order modulation signals are combined into the higher-order modulation signals.

Specifically, when transmitting the signals, the transmit end device first separately inserts $g(l)$ before and after $s_1(m)$, $s_2(m)$, $s_3(m)$, and $s_4(m)$ to obtain four digital signals, then separately performs filtering processing and digital-to-analog conversion on each digital signal to obtain four analog signals, multiplies each analog signal by a carrier frequency signal corresponding to a center frequency of a channel corresponding to the analog signal to obtain four radio frequency signals, and then sends the four radio frequency signals through corresponding antennas and channels.

Specifically, as shown in FIG. 7, the transmit end device sends the higher-order modulation signal $x_1(m)$ on the channel 1 through the antenna 1, sends the higher-order modulation signal $y_1(m)$ on the channel 2 through the antenna 1, sends the higher-order modulation signal $y_2(m)$ on the channel 1 through the antenna 2, and sends the higher-order modulation signal $x_2(m)$ on the channel 2 through the antenna 2. In addition, $x_1(m)$ and $x_2(m)$ are obtained by combining same lower-order modulation signals, and $y_1(m)$ and $y_2(m)$ are obtained by combining same lower-order modulation signals. Therefore, the transmit end device sends a same lower-order modulation signal to the receive end device through different antennas and different channels, thereby implementing signal transmission space diversity and frequency domain diversity, and improving signal transmission reliability.

In an optional example, the transmit end device sends the higher-order modulation signal $x_1(m)$ on the channel 1 through the antenna 1, sends the higher-order modulation signal $y_1(m)$ on the channel 2 through the antenna 1, sends the higher-order modulation signal $x_2(m)$ on the channel 1 through the antenna 2, and sends the higher-order modulation signal $y_2(m)$ on the channel 2 through the antenna 2.

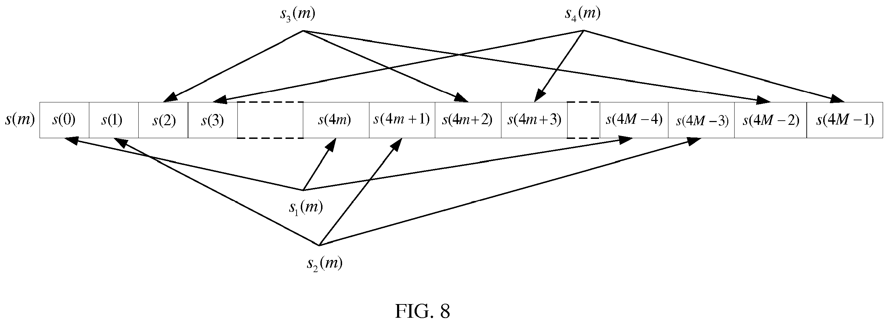

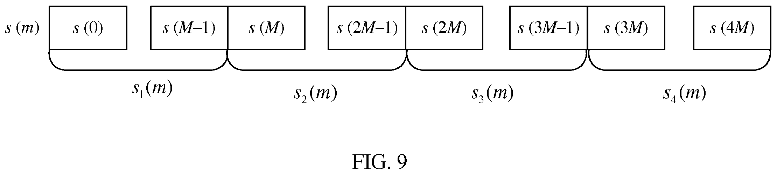

In all the foregoing embodiments, optionally, $s_1(m)$, $s_2(m)$, $s_3(m)$, and $s_4(m)$ may be obtained by grouping encoded and modulated signals. For example, the encoded and modulated signal is $s(m)$, where $m$=0, 1, ..., and 4$M$-1. The transmit end device performs grouping in an interleaved grouping manner shown in FIG. 8, where $s_1(m) = s(4m)$, $s_2(m) = s(4m+1)$, $s_3(m) = s(4m+2)$, and $s_4(m) = s(4m+3)$, and $m$=0, 1, ..., and $M$-1, or performs grouping in a continuous grouping manner shown in FIG. 9, where $s_1(m) = s(m)$, $s_2(m) = s(M+m)$, $s_3(m) = s(2M+m)$, and $s_4(m) = s(3M+m)$.

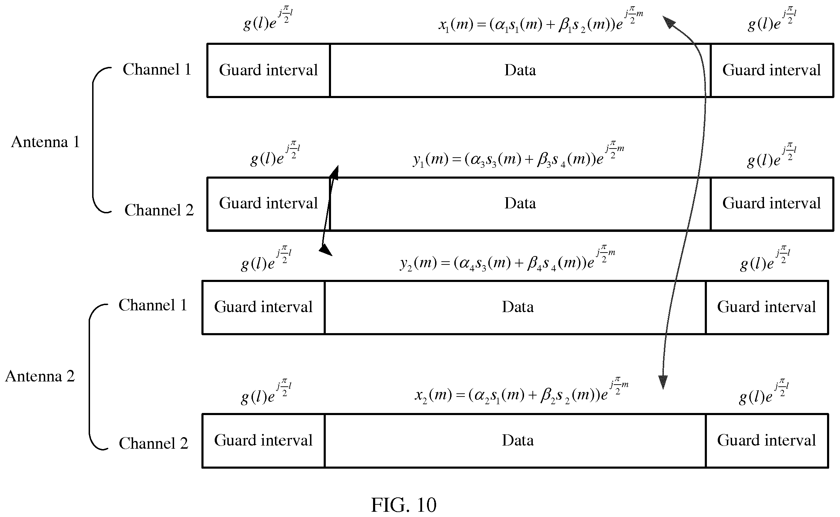

In this embodiment of this application, optionally, as shown in FIG. 10, the transmit end device performs phase shift processing on the higher-order modulation signals. Specifically, the transmit end device performs phase shift processing on each higher-order modulation symbol that forms the higher-order modulation signal, and a phase shift factor for the phase shift processing is $e^{j\frac{\pi}{2}m}$, where m is a number of each higher-order modulation symbol. Therefore,

$$x_1(m) = (\alpha_1 s_1(m) + \beta_1 s_2(m))e^{j\frac{\pi}{2}m}, \qquad x_2(m) = (\alpha_2 s_1(m) + \beta_2 s_2(m))e^{j\frac{\pi}{2}m},$$

$$y_1(m) = (\alpha_3 s_3(m) + \beta_3 s_4(m))e^{j\frac{\pi}{2}m}, \text{ and } y_2(m) = (\alpha_4 s_3(m) + \beta_4 s_4(m))e^{j\frac{\pi}{2}m}.$$ Correspondingly, the transmit end device performs phase shift processing on $g(l)$, and a phase shift factor for the phase shift processing is $e^{j\frac{\pi}{2}l}$. Therefore, guard signals and higher-order modulation signals shown in FIG. 10 are obtained. The transmit end device then sends the phase-shifted higher-order modulation signals and the phase-shifted guard signals to the receive end device through the antenna 1, the antenna 2, the channel 1, and the channel 2.

Optionally, in another embodiment, the plurality of lower-order modulation signals in S110 are sent to different receive end devices. Alternatively, it may be understood that the plurality of lower-order modulation signals in S110 are corresponding to a plurality of receive end devices.

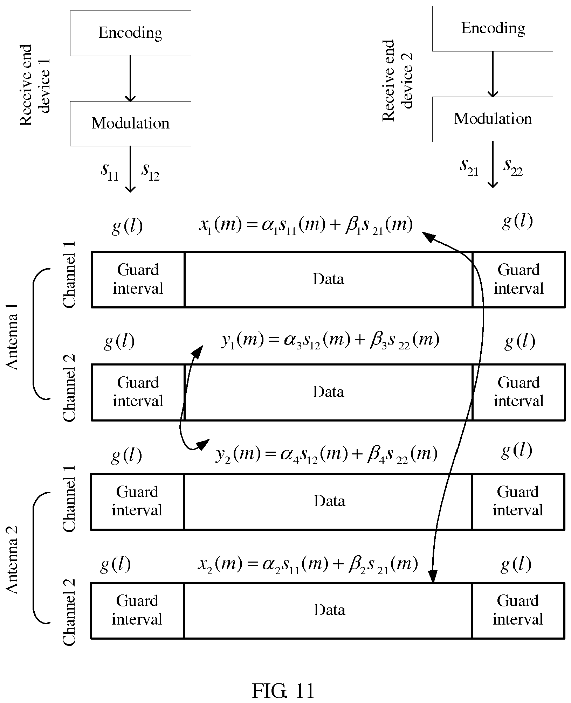

As shown in FIG. 11, there are four lower-order modulation signals: $s_{11}(m)$, $s_{12}(m)$, $s_{21}(m)$, and $s_{22}(m)$ where $s_{11}(m)$ and $s_{12}(m)$ are signals that need to be sent to a receive end device 1, and $s_{21}(m)$ and $s_{22}(m)$ are signals that need to be sent to a receive end device 2. $x_1(m) = (\alpha_1 s_{11}(m) + \beta_1 s_{21}(m))$, $x_2(m) = (\alpha_2 s_{11}(m) + \beta_2 s_{21}(m))$, $y_1(m) = (\alpha_3 s_{12}(m) + \beta_3 s_{22}(m))$, and $y_2(m) = (\alpha_4 s_{12}(m) + \beta_4 s_{22}(m))$ may be obtained according to the method in the embodiment shown in FIG. 7.

Similar to the embodiment shown in FIG. 7, the transmit end device sends the higher-order modulation signal $x_1(m)$ on the channel 1 through the antenna 1, sends the higher-order modulation signal $y_1(m)$ on the channel 2 through the antenna 1, sends the higher-order modulation signal $y_2(m)$ on the channel 1 through the antenna 2, and sends the higher-order modulation signal $x_2(m)$ on the channel 2 through the antenna 2. In addition, $x_1(m)$ and $x_2(m)$ are obtained by combining same lower-order modulation signals, and $y_1(m)$ and $y_2(m)$ are obtained by combining same lower-order modulation signals. Therefore, the transmit end device sends a same lower-order modulation signal to the receive end device through different antennas and different channels, thereby implementing signal transmission space diversity and frequency domain diversity, and improving signal transmission reliability. In addition, higher-order modulation signals transmitted by the transmit end device on a same channel include lower-order modulation signals that need to be sent to a plurality of users, thereby improving spectrum resource utilization.

In the embodiment shown in FIG. 11, optionally, the transmit end device sends the higher-order modulation signal $x_1(m)$ on the channel 1 through the antenna 1, sends the higher-order modulation signal $y_1(m)$ on the channel 2 through the antenna 1, sends the higher-order modulation signal $x_2(m)$ on the channel 1 through the antenna 2, and sends the higher-order modulation signal $y_2(m)$ on the channel 2 through the antenna 2.

In the embodiment shown in FIG. 11, optionally, $s_{11}(m)$, $s_{12}(m)$, $s_{21}(m)$, and $s_{22}(m)$ are obtained by grouping encoded and modulated signals. For example, it is assumed that an encoded and modulated signal that needs to be sent to the receive end device 1 is $s_1(m)$, where $m$=0, 1, ..., and 2$M$-1 herein. The transmit end device obtains $s_{11}(m) = s_1(2m)$ and $s_{12}(m) = s_1(2m+1)$ by performing grouping in the interleaved grouping manner, where $m$=0, 1, ..., and $M$-1. Alternatively, the transmit end device obtains $s_{11}(m) = s_1(m)$ and $s_{12}(m) = s_1(M+m)$ by performing grouping in the continuous grouping manner, where $m$=0, 1, ..., and $M$-1. Similarly, it is assumed that an encoded and modulated signal that needs to be sent to the receive end device 2 is $s_2(m)$, where $m$=0, 1, ..., and 2$M$-1 herein. The transmit end device obtains $s_{21}(m) = s_2(2m)$ and $s_{22}(m) = s_2(2m+1)$ by performing grouping in the interleaved grouping manner, where $m$=0, 1, ..., and $M$-1. Alternatively, the transmit end device obtains $s_{21}(m) = s_2(m)$ and $s_{22}(m) = s_2(M+m)$ by performing grouping in the continuous grouping manner, where $m$=0, 1, ..., and $M$-1.

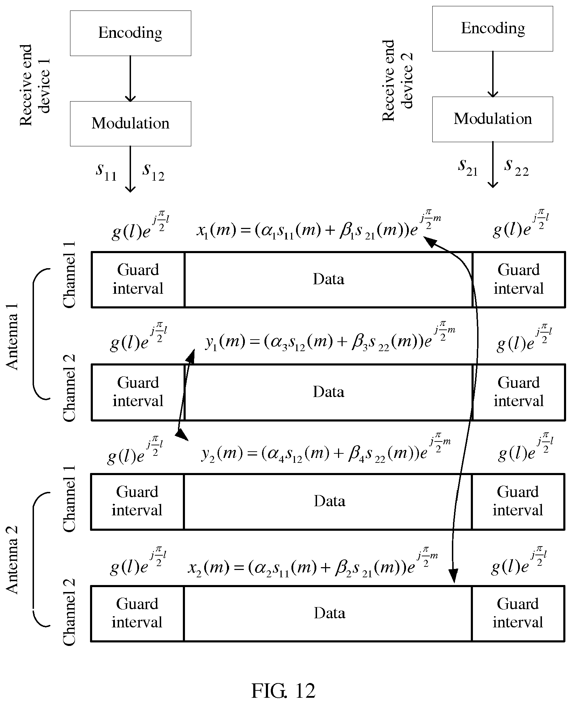

Optionally, as shown in FIG. 12, the transmit end device obtains $x_1(m) = (\alpha_1 s_{11}(m) + \beta_1 s_{21}(m))e^{j\frac{\pi}{2}m}$,

$$x_2(m) = (\alpha_2 s_{11}(m) + \beta_2 s_{21}(m)) e^{j\frac{\pi}{2}m} \qquad y_1(m) = (\alpha_3 s_{12}(m) + \beta_3 s_{22}(m)) e^{j\frac{\pi}{2}m}$$ , and

$$y_2(m) = (\alpha_4 s_{12}(m) + \beta_4 s_{22}(m)) e^{j\frac{\pi}{2}m}$$ by performing phase shift processing on the higher-order modulation signals. Correspondingly, the transmit end device performs phase shift processing on $g(l)$, and a phase shift factor for the phase shift processing is $e^{j\frac{\pi}{2}l}$. Therefore, guard signals and higher-order modulation signals shown in FIG. 12 are obtained. The transmit end device then sends the phase-shifted higher-order modulation signals and the phase-shifted guard signals to the receive end devices through the antenna 1, the antenna 2, the channel 1, and the channel 2.

It may be understood that in all the foregoing embodiments, when corresponding to different lower-order modulation signals and different higher-order modulation signals, $\alpha_1$, $\beta_1$, $\alpha_2$, $\beta_2$, $\alpha_3$, $\beta_3$, $\alpha_4$, and $\beta_4$ have different values. It is assumed that a matrix formed by $\alpha_1$, $\beta_1$, $\alpha_2$, and $\beta_2$ is a matrix $Q_1$, and a matrix formed by $\alpha_3$, $\beta_3$, $\alpha_4$, and $\beta_4$ is a matrix $Q_2$. Specifically, when the lower-order modulation signals are BPSK signals, and the higher-order modulation signals are QPSK signals, the matrix $Q_1$ and the matrix $Q_2$ each may be specifically one of the following matrices:

$$\mathbf{Q} = \frac{1}{\sqrt{2}} \begin{bmatrix} 1 & j \\ 1 & j \end{bmatrix},$$

$$\mathbf{Q} = \frac{1}{\sqrt{2}} \begin{bmatrix} 1 & j \\ 1 & -j \end{bmatrix},$$

$$\mathbf{Q} = \frac{1}{\sqrt{2}} \begin{bmatrix} 1 & j \\ -1 & j \end{bmatrix},$$

$$\mathbf{Q} = \frac{1}{\sqrt{2}} \begin{bmatrix} 1 & j \\ -1 & -j \end{bmatrix},$$

$$\mathbf{Q} = \frac{1}{\sqrt{2}} \begin{bmatrix} 1 & -j \\ 1 & j \end{bmatrix},$$

$$\mathbf{Q} = \frac{1}{\sqrt{2}} \begin{bmatrix} 1 & -j \\ 1 & -j \end{bmatrix},$$

$$\mathbf{Q} = \frac{1}{\sqrt{2}} \begin{bmatrix} 1 & -j \\ -1 & j \end{bmatrix},$$

$$\mathbf{Q} = \frac{1}{\sqrt{2}} \begin{bmatrix} 1 & -j \\ -1 & -j \end{bmatrix},$$

$$\mathbf{Q} = \frac{1}{\sqrt{2}} \begin{bmatrix} -1 & j \\ 1 & j \end{bmatrix},$$

$$\mathbf{Q} = \frac{1}{\sqrt{2}} \begin{bmatrix} -1 & j \\ 1 & -j \end{bmatrix},$$

$$Q = \frac{1}{\sqrt{2}} \begin{bmatrix} -1 & j \\ -1 & j \end{bmatrix},$$

$$Q = \frac{1}{\sqrt{2}} \begin{bmatrix} -1 & j \\ -1 & -j \end{bmatrix},$$

$$Q = \frac{1}{\sqrt{2}} \begin{bmatrix} -1 & -j \\ 1 & j \end{bmatrix},$$

$$Q = \frac{1}{\sqrt{2}} \begin{bmatrix} -1 & -j \\ 1 & -j \end{bmatrix},$$

$$Q = \frac{1}{\sqrt{2}} \begin{bmatrix} -1 & -j \\ -1 & j \end{bmatrix},$$

and

$$Q = \frac{1}{\sqrt{2}} \begin{bmatrix} -1 & -j \\ -1 & -j \end{bmatrix}.$$

When the lower-order modulation signals are QPSK signals, and the higher-order modulation signals are 16-QAM signals, the matrix $Q_1$ and the matrix $Q_2$ each may be specifically one of the following matrices:

$$Q = \frac{1}{\sqrt{5}} \begin{bmatrix} 1 & 2 \\ 1 & 2 \end{bmatrix},$$

$$Q = \frac{1}{\sqrt{5}} \begin{bmatrix} 1 & 2 \\ -1 & 2 \end{bmatrix},$$

$$Q = \frac{1}{\sqrt{5}} \begin{bmatrix} 1 & 2 \\ 2 & 1 \end{bmatrix},$$

$$Q = \frac{1}{\sqrt{5}} \begin{bmatrix} 1 & 2 \\ -2 & 1 \end{bmatrix},$$

$$Q = \frac{1}{\sqrt{5}} \begin{bmatrix} -1 & 2 \\ 1 & 2 \end{bmatrix},$$

$$Q = \frac{1}{\sqrt{5}} \begin{bmatrix} -1 & 2 \\ -1 & 2 \end{bmatrix},$$

$$Q = \frac{1}{\sqrt{5}} \begin{bmatrix} -1 & 2 \\ 2 & 1 \end{bmatrix},$$

$$Q = \frac{1}{\sqrt{5}} \begin{bmatrix} -1 & 2 \\ -2 & 1 \end{bmatrix},$$

$$Q = \frac{1}{\sqrt{5}} \begin{bmatrix} 2 & 1 \\ 1 & 2 \end{bmatrix},$$

$$Q = \frac{1}{\sqrt{5}} \begin{bmatrix} 2 & 1 \\ -1 & 2 \end{bmatrix},$$

$$Q = \frac{1}{\sqrt{5}} \begin{bmatrix} 2 & 1 \\ 2 & 1 \end{bmatrix},$$

$$Q = \frac{1}{\sqrt{5}} \begin{bmatrix} 2 & 1 \\ -2 & 1 \end{bmatrix},$$

$$Q = \frac{1}{\sqrt{5}} \begin{bmatrix} -2 & 1 \\ 1 & 2 \end{bmatrix},$$

$$Q = \frac{1}{\sqrt{5}} \begin{bmatrix} -2 & 1 \\ -1 & 2 \end{bmatrix},$$

$$Q = \frac{1}{\sqrt{5}} \begin{bmatrix} -2 & 1 \\ 2 & 1 \end{bmatrix},$$

and

$$Q = \frac{1}{\sqrt{5}} \begin{bmatrix} -2 & 1 \\ -2 & 1 \end{bmatrix}.$$

When the lower-order modulation signals are QPSK signals, and the higher-order modulation signals are 16-APSK signals, the matrix $Q_1$ and the matrix $Q_2$ each may be specifically one of the following matrices:

$$Q = \frac{1}{\sqrt{2}} \begin{bmatrix} 1 & e^{j\theta} \\ 1 & e^{j\theta} \end{bmatrix},$$

$$Q = \frac{1}{\sqrt{2}} \begin{bmatrix} 1 & e^{j\theta} \\ 1 & -e^{j\theta} \end{bmatrix},$$

$$Q = \frac{1}{\sqrt{2}} \begin{bmatrix} 1 & e^{j\theta} \\ -1 & e^{j\theta} \end{bmatrix},$$

$$Q = \frac{1}{\sqrt{2}} \begin{bmatrix} 1 & e^{j\theta} \\ -1 & -e^{j\theta} \end{bmatrix},$$

$$\mathbf{Q} = \frac{1}{\sqrt{2}} \begin{bmatrix} 1 & -e^{j\theta} \\ 1 & e^{j\theta} \end{bmatrix} \quad,$$

$$\mathbf{Q} = \frac{1}{\sqrt{2}} \begin{bmatrix} 1 & -e^{j\theta} \\ 1 & -e^{j\theta} \end{bmatrix} \quad,$$

$$\mathbf{Q} = \frac{1}{\sqrt{2}} \begin{bmatrix} 1 & -e^{j\theta} \\ -1 & e^{j\theta} \end{bmatrix} \quad,$$

$$\mathbf{Q} = \frac{1}{\sqrt{2}} \begin{bmatrix} 1 & -e^{j\theta} \\ -1 & -e^{j\theta} \end{bmatrix},$$

$$\mathbf{Q} = \frac{1}{\sqrt{2}} \begin{bmatrix} -1 & e^{j\theta} \\ 1 & e^{j\theta} \end{bmatrix} \quad,$$

$$\mathbf{Q} = \frac{1}{\sqrt{2}} \begin{bmatrix} -1 & e^{j\theta} \\ 1 & -e^{j\theta} \end{bmatrix} \quad,$$

$$\mathbf{Q} = \frac{1}{\sqrt{2}} \begin{bmatrix} -1 & e^{j\theta} \\ -1 & e^{j\theta} \end{bmatrix} \quad,$$

$$\mathbf{Q} = \frac{1}{\sqrt{2}} \begin{bmatrix} 1 & -e^{j\theta} \\ -1 & -e^{j\theta} \end{bmatrix},$$

$$\mathbf{Q} = \frac{1}{\sqrt{2}} \begin{bmatrix} -1 & -e^{j\theta} \\ 1 & e^{j\theta} \end{bmatrix} \quad,$$

$$\mathbf{Q} = \frac{1}{\sqrt{2}} \begin{bmatrix} -1 & -e^{j\theta} \\ 1 & -e^{j\theta} \end{bmatrix} \quad,$$

$$\mathbf{Q} = \frac{1}{\sqrt{2}} \begin{bmatrix} -1 & -e^{j\theta} \\ -1 & e^{j\theta} \end{bmatrix} \quad,$$

and

$$\mathbf{Q} = \frac{1}{\sqrt{2}} \begin{bmatrix} -1 & -e^{j\theta} \\ -1 & -e^{j\theta} \end{bmatrix}.$$

In the embodiments described above, optionally, a value of $\theta$ is one of the following values: $\pi/4$, $3\pi/4$; $-\pi/4$, and $-3\pi/4$.

Correspondingly, radio frequency signals that are received by the receive end device in frequency domain and that are sent by the transmit end device through a plurality of antennas and a plurality of channels may be represented as a formula (1):

$$
\underbrace{\begin{bmatrix} r_{f_{1,1}}(k) \\ r_{f_{2,1}}(k) \\ r_{f_{1,2}}(k) \\ r_{f_{2,2}}(k) \end{bmatrix}}_{\mathbf{r}_f(k)} = \underbrace{\begin{bmatrix} h^{[11]}_{f,1}(k) & h^{[12]}_{f,1}(k) & 0 & 0 \\ h^{[21]}_{f,1}(k) & h^{[22]}_{f,1}(k) & 0 & 0 \\ 0 & 0 & h^{[11]}_{f,2}(k) & h^{[12]}_{f,2}(k) \\ 0 & 0 & h^{[21]}_{f,2}(k) & h^{[22]}_{f,2}(k) \end{bmatrix}}_{\mathbf{H}_f(k)} \underbrace{\begin{bmatrix} \widetilde{x}_{f_1}(k) \\ \widetilde{x}_{f_2}(k) \\ \widetilde{y}_{f_1}(k) \\ \widetilde{y}_{f_2}(k) \end{bmatrix}}_{\mathbf{z}_f(k)} \qquad (1),
$$

where

$$
\widetilde{x}_{f_1}(k) = \mathbf{FFT}\{\widetilde{x}_1(n)\}, \quad \widetilde{x}_1(n) = \begin{cases} x_1(n) & , \quad n = 0, \cdots, M-1 \\ g(n-M) & , \quad n = M, \cdots, N \end{cases};
$$

$$
\widetilde{x}_{f_2}(k) = \mathbf{FFT}\{\widetilde{x}_2(n)\}, \quad \widetilde{x}_2(n) = \begin{cases} x_2(n) & , \quad n = 0, \cdots, M-1 \\ g(n-M) & , \quad n = M, \cdots, N \end{cases};
$$

$$
\widetilde{y}_{f_1}(k) = \mathbf{FFT}\{\widetilde{y}_1(n)\}, \quad \widetilde{y}_1(n) = \begin{cases} y_1(n) & , \quad n = 0, \cdots, M-1 \\ g(n-M) & , \quad n = M, \cdots, N \end{cases};
$$

and

$$
\widetilde{y}_{f_2}(k) = \mathbf{FFT}\{\widetilde{y}_2(n)\}, \quad \widetilde{y}_2(n) = \begin{cases} y_2(n) & , \quad n = 0, \cdots, M-1 \\ g(n-M) & , \quad n = M, \cdots, N \end{cases};
$$

$k = 0, 1, \cdots, N-1$, $N = M + G$, $r_{f_{1,1}}(k)$ represents a signal received by a receive antenna 1 on a subcarrier k on the channel 1, $r_{f2,1}(k)$ represents a signal received by a receive antenna 2 on the subcarrier k on the channel 1, $r_{f1,2}(k)$ represents a signal received by the receive antenna 1 on a subcarrier k on the channel 2, $r_{f2,2}(k)$ represents a signal received by the receive antenna 2 on the subcarrier k on the channel 2, $h^{[11]}_{f,1}(k)$ represents a channel response from a transmit antenna 1 to the receive antenna 1 on the subcarrier k on the channel 1, $h^{[12]}_{f,1}(k)$ represents a channel response from a transmit antenna 2 to the receive antenna 1 on the subcarrier k on the channel 1, $h^{[21]}_{f,1}(k)$ represents a channel response from the transmit antenna 1 to the receive antenna 2 on the subcarrier k on the channel 1, $h^{[22]}_{f,1}(k)$ represents a channel response from the transmit antenna 2 to the receive antenna 2 on the subcarrier k on the channel 1, $h^{[11]}_{f,2}(k)$ represents a channel response from the transmit antenna 1 to the receive antenna 1 on the subcarrier k on the channel 2, $h^{[12]}_{f,2}(k)$ represents a channel response from the transmit antenna 2 to the receive antenna 1 on the subcarrier k on the channel 2, $h^{[21]}_{f,2}(k)$ represents a channel response from the transmit antenna 1 to the receive antenna 2 on the subcarrier k on the channel 2, and $h^{[22]}_{f,2}(k)$ represents a channel response from the transmit antenna 2 to the receive antenna 2 on the subcarrier k on the channel 2.

The receive end device processes the received signal by using a zero forcing (Zero Forcing, ZF) algorithm to obtain $z_f(k)$, and $z_f(k)$ may be represented by using a formula (2):

$$\mathbf{z}_f(k) = \left(\mathbf{H}_f^H(k)\mathbf{H}_f(k)\right)^{-1}\mathbf{H}_f^H(k)\mathbf{r}_f(k) \quad (2).$$

In the formula (2), $(\cdot)^H$ represents conjugate transpose, and $(\cdot)^{-1}$ represents an inverse operation.

Further, after obtaining $z_f(k)$, the receive end device performs inverse Fourier transform on $\tilde{x}_{f1}(k)$, $\tilde{x}_{f2}(k)$, $\tilde{y}_{f1}(k)$, and $\tilde{y}_{f2}(k)$, to obtain formulas (3) to (6):

$$\tilde{x}_1(n) = \mathbf{IFFT}\left\{\tilde{x}_{f_1}(k)\right\}, \text{ where } n = 0, 1, \cdots, N - 1 \quad (3)$$

$$\tilde{x}_2(n) = \mathbf{IFFT}\left\{\tilde{x}_{f_2}(k)\right\}, \text{ where } n = 0, 1, \cdots, N - 1 \quad (4)$$

$$\tilde{y}_1(n) = \mathbf{IFFT}\left\{\tilde{y}_{f_1}(k)\right\}, \text{ where } n = 0, 1, \cdots, N - 1 \quad (5),$$

and

$$\tilde{y}_2(n) = \mathbf{IFFT}\left\{\tilde{y}_{f_2}(k)\right\}, \text{ where } n = 0, 1, \cdots, N - 1 \quad (6)$$

The receive end device may further obtain $x_1(m)$, $x_2(m)$, $y_1(m)$, and $y_2(m)$ based on the obtained $\tilde{x}_1(n)$, $\tilde{x}_{f2}(n)$, $\tilde{y}_1(n)$, and $\tilde{y}_2(n)$ and may further obtain $s_1(m)$, $s_2(m)$ $s_3(m)$, and $s_4(m)$ based on the obtained $x_1(m)$, $x_2(m)$, $y_1(m)$, and $y_2(m)$.

It may be understood that in the embodiment shown in FIG. 11, the receive end device 1 and the receive end device 2 also obtain $s_{11}(m)$, $s_{12}(m)$, $s_{21}(m)$, and $s_{22}(m)$ by performing the foregoing method.

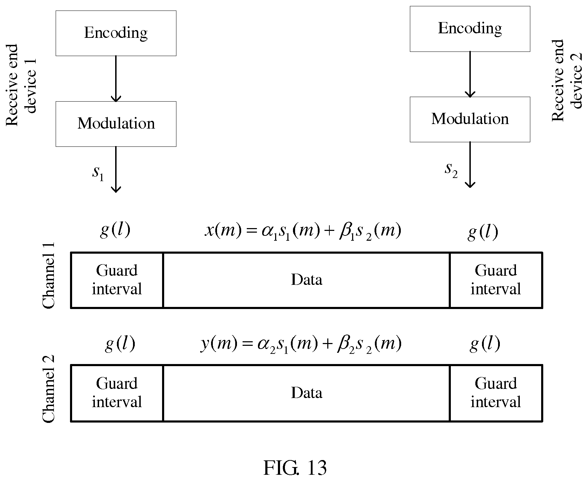

FIG. 13 is a schematic diagram of a signal transmission method according to still another embodiment of this application. As shown in FIG. 13, a transmit end device sends signals to a receive end device 1 and a receive end device 2 through two channels of one antenna. There are two lower-order modulation signals: $s_1(m)$ and $s_2(m)$, where $s_1(m)$ is a signal that needs to be sent to the receive end device 1, and $s_2(m)$ is a signal that needs to be sent to the receive end device 2. There are two higher-order modulation signals: $x(m)$ and $y(m)$, where $m$=0, 1, ..., and $M$-1, and $M$ is a length that is of a data part and that is stipulated in a protocol. The transmit end device determines that a guard signal that forms a guard interval is $g(l)$, where $l$=0, 1, ..., and $G$-1, and G is a length that is of a guard sequence and that is stipulated in the protocol.

It should be noted that in the embodiment shown in FIG. 13, values of $M$ and G, a modulation manner of the guard signal, and a method for combining lower-order modulation signals into higher-order modulation signals are the same as those in the embodiment shown in FIG. 7. To avoid repetition, details are not described herein again.

Specifically, as shown in FIG. 13, $x(m) = (\alpha_1 s_1(m) + \beta_1 s_2(m))$ and $y(m) = (\alpha_2 s_1(m) + \beta_2 s_2(m))$. The transmit end device sends $x(m)$ on a channel 1, and sends $y(m)$ on a channel 2.

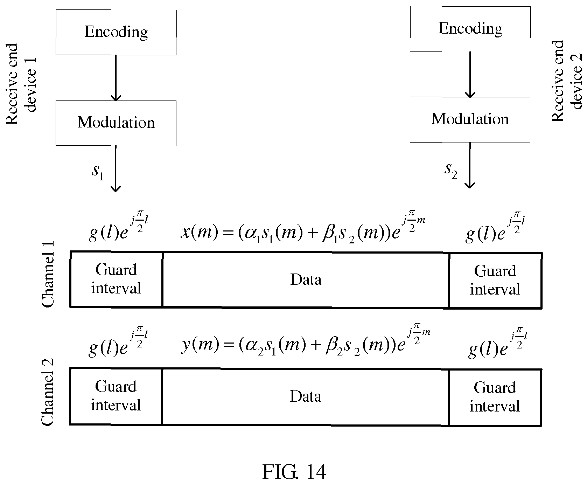

Optionally, as shown in FIG. 14, after performing phase shift processing on the higher-order modulation signals and the guard signals, the transmit end device sends phase-shifted higher-order modulation signals and phase-shifted guard signals.

Correspondingly, frequency domain signals received by the receive end device 1 and the receive end device 2 may be represented as a formula (7):

$$\underbrace{\begin{bmatrix} r_{f_1}(k) \\ r_{f_2}(k) \end{bmatrix}}_{\mathbf{r}_f(k)} = \underbrace{\begin{bmatrix} h_{f,1}(k) & 0 \\ & h_{f,2}(k) \end{bmatrix}}_{\mathbf{H}_f(k)} \underbrace{\begin{bmatrix} \tilde{x}_f(k) \\ \tilde{y}_f(k) \end{bmatrix}}_{\mathbf{z}_f(k)} \quad (7),$$

where

$$\widetilde{x}_f(k) = \mathbf{FFT}\{\widetilde{x}(n)\}, \quad \widetilde{x}(n) = \begin{cases} x(n) & , \quad n = 0, \cdots, M-1 \\ g(n-M) & , \quad n = M, \cdots, N \end{cases};$$

and

$$\widetilde{y}_f(k) = \mathbf{FFT}\{\widetilde{y}(n)\}, \quad \widetilde{y}(n) = \begin{cases} y(n) & , \quad n = 0, \cdots, M-1 \\ g(n-M) & , \quad n = M, \cdots, N \end{cases};$$

$k = 0, 1, \cdots, N-1$, $N=M+G$, $r_{f1}(k)$ represents a signal received by a receive antenna on a subcarrier k on the channel 1, $r_{f2}(k)$ represents a signal received by the receive antenna on a subcarrier k on the channel 2, $h_{f,1}(k)$ represents a channel response from a transmit antenna to the receive antenna on the subcarrier k on the channel 1, and $h_{f,2}(k)$ represents a channel response from the transmit antenna to the receive antenna on the subcarrier k on the channel 2.

The receive end device 1 and the receive end device 2 process the received signals by using a zero forcing (Zero Forcing, "ZF" for short) algorithm to obtain $z_f(k)$, and $z_f(k)$ may be represented by using a formula (8):

$$\mathbf{z}_f(k) = \left(\mathbf{H}_f^H(k)\mathbf{H}_f(k)\right)^{-1}\mathbf{H}_f^H(k)\mathbf{r}_f(k) \quad (8),$$

where $(\cdot)^H$ represents conjugate transpose, and $(\cdot)^{-1}$ represents an inverse operation.

Further, after obtaining $z_f(k)$, the receive end device 1 and the receive end device 2 perform inverse Fourier transform on $\widetilde{x}_{f1}(k)$, $\widetilde{x}_{f2}(k)$, $\widetilde{y}_{f1}(k)$, and $\widetilde{y}_{f2}(k)$, to obtain formulas (9) and (10):

$$\widetilde{x}(n) = \mathbf{IFFT}\{\widetilde{x}_f(k)\}, \text{ where } n = 0, 1, \cdots, N-1 \quad (9),$$

and

$$\widetilde{y}(n) = \mathbf{IFFT}\{\widetilde{y}_f(k)\}, \text{ where } n = 0, 1, \cdots, N-1 \quad (10)$$

The receive end device may further obtain $x(m)$ and $y(m)$ based on the obtained $\widetilde{x}(n)$ and $\widetilde{y}(n)$, and the receive end device may further obtain $s_1(m)$ and $s_2(m)$ based on the obtained $x(m)$ and $y(m)$.

Therefore, according to the signal transmission method shown in FIG. 13 and FIG. 14, signals transmitted by the transmit end device on a plurality of channels are all obtained by combining signals corresponding to a plurality of receive end devices. Therefore, spectrum resource utilization can be improved.

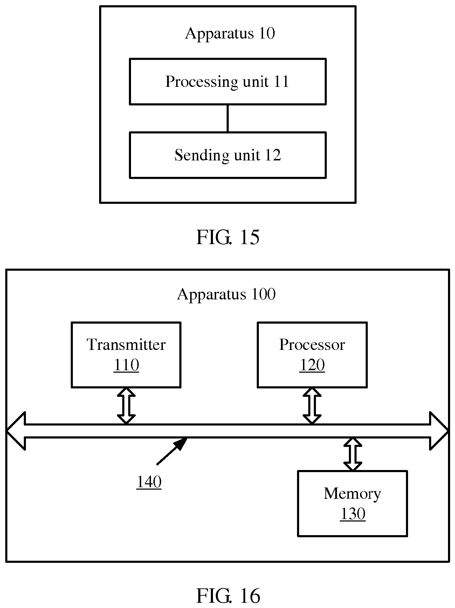

The signal transmission method according to the embodiments of this application is described above in detail with reference to FIG. 6 to FIG. 14. A signal transmission apparatus according to an embodiment of this application is described below in detail with reference to FIG. 15.

FIG. 15 is a schematic block diagram of a signal transmission apparatus according to an embodiment of this application. As shown in FIG. 15, the apparatus 10 includes:

a processing unit 11, configured to combine a plurality of lower-order modulation signals into K higher-order modulation signals; and

a sending unit 12, configured to transmit the K higher-order modulation signals through L antennas, where a higher-order modulation signal transmitted on an $i^{th}$ channel corresponding to an $m^{th}$ antenna in the L antennas and a higher-order modulation signal transmitted on a $j^{th}$ channel corresponding to an $n^{th}$ antenna are obtained by combining same lower-order modulation signals, K is equal to 4, L is equal to 2, m and n are positive integers less than or equal to L, m≠n, and i and j are positive integers.

Therefore, according to the signal transmission apparatus in this embodiment of this application, a plurality of lower-order modulation signals are combined into a plurality of higher-order modulation signals, and the plurality of higher-order modulation signals are sent through a plurality of antennas. Therefore, signal transmission space diversity is implemented, and signal transmission reliability and performance of a communications system are improved.

In this embodiment of this application, optionally, the plurality of lower-order modulation signals are corresponding to a plurality of receive end devices, and a plurality of lower-order modulation signals combined into a same higher-order modulation signal are corresponding to different receive end devices.

In this embodiment of this application, optionally, the processing unit 11 is further configured to perform phase shift processing on each higher-order modulation signal to obtain K phase-shifted higher-order modulation signals, where a phase shift factor for the phase shift processing is $e^{j\frac{\pi}{2}k}$, k is a number of each higher-order modulation signal, and $k$=1, 2, ..., and $K$.

The sending unit 12 is specifically configured to transmit the K phase-shifted higher-order modulation signals through the L antennas.

In this embodiment of this application, K=4, and L=2.

In this embodiment of this application, the two antennas include a first antenna and a second antenna, the first antenna is corresponding to a first channel and a second channel, the second antenna is corresponding to the first channel and the second channel, and a higher-order modulation signal transmitted on the first channel corresponding to the first antenna and a higher-order modulation signal transmitted on the second channel corresponding to the second antenna are obtained by combining same lower-order modulation signals.

In this embodiment of this application, the processing unit 11 is specifically configured to determine the K higher-order modulation signals based on the plurality of lower-order modulation signals and a channel matrix Q.

In this embodiment of this application, optionally, the plurality of lower-order modulation signals are binary phase shift keying BPSK signals, and the K higher-order modulation signals are quadrature phase shift keying QPSK signals.

In this embodiment of this application, optionally, the matrix Q is one of the following matrices:

$$\mathbf{Q} = \frac{1}{\sqrt{2}} \begin{bmatrix} 1 & j \\ 1 & j \end{bmatrix},$$

$$\mathbf{Q} = \frac{1}{\sqrt{2}} \begin{bmatrix} 1 & j \\ 1 & -j \end{bmatrix},$$

$$\mathbf{Q} = \frac{1}{\sqrt{2}} \begin{bmatrix} 1 & j \\ -1 & j \end{bmatrix},$$

$$\mathbf{Q} = \frac{1}{\sqrt{2}} \begin{bmatrix} 1 & j \\ -1 & -j \end{bmatrix},$$

$$\mathbf{Q} = \frac{1}{\sqrt{2}} \begin{bmatrix} 1 & -j \\ 1 & j \end{bmatrix},$$

$$\mathbf{Q} = \frac{1}{\sqrt{2}} \begin{bmatrix} 1 & -j \\ 1 & -j \end{bmatrix},$$

$$\mathbf{Q} = \frac{1}{\sqrt{2}} \begin{bmatrix} 1 & -j \\ -1 & j \end{bmatrix},$$

$$\mathbf{Q} = \frac{1}{\sqrt{2}} \begin{bmatrix} 1 & -j \\ -1 & -j \end{bmatrix},$$

$$\mathbf{Q} = \frac{1}{\sqrt{2}} \begin{bmatrix} -1 & j \\ 1 & j \end{bmatrix},$$

$$Q = \frac{1}{\sqrt{2}} \begin{bmatrix} -1 & j \\ 1 & -j \end{bmatrix},$$

$$Q = \frac{1}{\sqrt{2}} \begin{bmatrix} -1 & j \\ -1 & j \end{bmatrix},$$

$$Q = \frac{1}{\sqrt{2}} \begin{bmatrix} -1 & j \\ -1 & -j \end{bmatrix},$$

$$Q = \frac{1}{\sqrt{2}} \begin{bmatrix} -1 & -j \\ 1 & j \end{bmatrix},$$

$$Q = \frac{1}{\sqrt{2}} \begin{bmatrix} -1 & -j \\ 1 & -j \end{bmatrix},$$

$$Q = \frac{1}{\sqrt{2}} \begin{bmatrix} -1 & -j \\ -1 & j \end{bmatrix},$$

and

$$Q = \frac{1}{\sqrt{2}} \begin{bmatrix} -1 & -j \\ -1 & -j \end{bmatrix}.$$

In this embodiment of this application, optionally, the plurality of lower-order modulation signals are QPSK signals, and the K higher-order modulation signals are 16-quadrature amplitude modulation QAM signals.

In this embodiment of this application, optionally, the matrix Q is one of the following matrices:

$$Q = \frac{1}{\sqrt{5}} \begin{bmatrix} 1 & 2 \\ 1 & 2 \end{bmatrix},$$

$$Q = \frac{1}{\sqrt{5}} \begin{bmatrix} 1 & 2 \\ -1 & 2 \end{bmatrix},$$

$$Q = \frac{1}{\sqrt{5}} \begin{bmatrix} 1 & 2 \\ 2 & 1 \end{bmatrix},$$

$$Q = \frac{1}{\sqrt{5}} \begin{bmatrix} 1 & 2 \\ -2 & 1 \end{bmatrix},$$

$$Q = \frac{1}{\sqrt{5}} \begin{bmatrix} -1 & 2 \\ 1 & 2 \end{bmatrix},$$

$$Q = \frac{1}{\sqrt{5}} \begin{bmatrix} -1 & 2 \\ -1 & 2 \end{bmatrix},$$

$$\mathbf{Q} = \frac{1}{\sqrt{5}} \begin{bmatrix} -1 & 2 \\ 2 & 1 \end{bmatrix},$$

$$\mathbf{Q} = \frac{1}{\sqrt{5}} \begin{bmatrix} -1 & 2 \\ -2 & 1 \end{bmatrix},$$

$$\mathbf{Q} = \frac{1}{\sqrt{5}} \begin{bmatrix} 2 & 1 \\ 1 & 2 \end{bmatrix},$$

$$\mathbf{Q} = \frac{1}{\sqrt{5}} \begin{bmatrix} 2 & 1 \\ -1 & 2 \end{bmatrix},$$

$$\mathbf{Q} = \frac{1}{\sqrt{5}} \begin{bmatrix} 2 & 1 \\ 2 & 1 \end{bmatrix},$$

$$\mathbf{Q} = \frac{1}{\sqrt{5}} \begin{bmatrix} 2 & 1 \\ -2 & 1 \end{bmatrix},$$

$$\mathbf{Q} = \frac{1}{\sqrt{5}} \begin{bmatrix} -2 & 1 \\ 1 & 2 \end{bmatrix},$$

$$\mathbf{Q} = \frac{1}{\sqrt{5}} \begin{bmatrix} -2 & 1 \\ -1 & 2 \end{bmatrix},$$

$$\mathbf{Q} = \frac{1}{\sqrt{5}} \begin{bmatrix} -2 & 1 \\ 2 & 1 \end{bmatrix},$$

and

$$\mathbf{Q} = \frac{1}{\sqrt{5}} \begin{bmatrix} -2 & 1 \\ -2 & 1 \end{bmatrix}.$$

In this embodiment of this application, optionally, the plurality of lower-order modulation signals are QPSK signals, and the K higher-order modulation signals are 16-amplitude phase shift keying APSK signals.

In this embodiment of this application, optionally, the matrix Q is one of the following matrices:

$$\mathbf{Q} = \frac{1}{\sqrt{2}} \begin{bmatrix} 1 & e^{j\theta} \\ 1 & e^{j\theta} \end{bmatrix},$$

$$\mathbf{Q} = \frac{1}{\sqrt{2}} \begin{bmatrix} 1 & e^{j\theta} \\ 1 & -e^{j\theta} \end{bmatrix},$$

$$\mathbf{Q} = \frac{1}{\sqrt{2}} \begin{bmatrix} 1 & e^{j\theta} \\ -1 & e^{j\theta} \end{bmatrix},$$

$$Q = \frac{1}{\sqrt{2}} \begin{bmatrix} 1 & e^{j\theta} \\ -1 & -e^{j\theta} \end{bmatrix},$$

$$Q = \frac{1}{\sqrt{2}} \begin{bmatrix} 1 & -e^{j\theta} \\ 1 & e^{j\theta} \end{bmatrix},$$

$$Q = \frac{1}{\sqrt{2}} \begin{bmatrix} 1 & -e^{j\theta} \\ 1 & -e^{j\theta} \end{bmatrix},$$

$$Q = \frac{1}{\sqrt{2}} \begin{bmatrix} 1 & -e^{j\theta} \\ -1 & e^{j\theta} \end{bmatrix},$$

$$Q = \frac{1}{\sqrt{2}} \begin{bmatrix} 1 & -e^{j\theta} \\ -1 & -e^{j\theta} \end{bmatrix},$$

$$Q = \frac{1}{\sqrt{2}} \begin{bmatrix} -1 & e^{j\theta} \\ 1 & e^{j\theta} \end{bmatrix},$$

$$Q = \frac{1}{\sqrt{2}} \begin{bmatrix} -1 & e^{j\theta} \\ 1 & -e^{j\theta} \end{bmatrix},$$

$$Q = \frac{1}{\sqrt{2}} \begin{bmatrix} -1 & e^{j\theta} \\ -1 & e^{j\theta} \end{bmatrix},$$

$$Q = \frac{1}{\sqrt{2}} \begin{bmatrix} 1 & -e^{j\theta} \\ -1 & -e^{j\theta} \end{bmatrix},$$

$$Q = \frac{1}{\sqrt{2}} \begin{bmatrix} -1 & -e^{j\theta} \\ 1 & e^{j\theta} \end{bmatrix},$$

$$Q = \frac{1}{\sqrt{2}} \begin{bmatrix} -1 & -e^{j\theta} \\ 1 & -e^{j\theta} \end{bmatrix},$$

$$Q = \frac{1}{\sqrt{2}} \begin{bmatrix} -1 & -e^{j\theta} \\ -1 & e^{j\theta} \end{bmatrix},$$

and

$$Q = \frac{1}{\sqrt{2}} \begin{bmatrix} -1 & -e^{j\theta} \\ -1 & -e^{j\theta} \end{bmatrix}.$$

In this embodiment of this application, optionally, a value of $\theta$ is one of the following values: $\pi/4$, $3\pi/4$; $-\pi/4$, and $-3\pi/4$.

In this embodiment of this application, optionally, channel bandwidth of the first channel and/or the second channel is an integer multiple of 2.16 GHz.

The apparatus 10 according to this embodiment of this application may be corresponding to the transmit end device in the method in the embodiments of this application. In addition, all units, namely, modules, of the apparatus 10 and the foregoing and other operations and/or functions are respectively intended to implement corresponding procedures of the method 100. For brevity, details are not described herein.

Therefore, according to the signal transmission apparatus in this embodiment of this application, a plurality of lower-order modulation signals are combined into a plurality of higher-order modulation signals, and the plurality of higher-order modulation signals are sent through a plurality of antennas. Therefore, signal transmission space diversity is implemented, and signal transmission reliability and performance of a communications system are improved.

FIG. 16 is a schematic structural diagram of a signal transmission apparatus according to another embodiment of this application. The apparatus in FIG. 16 may perform the method performed by the transmit end device in the procedures in FIG. 6 and FIG. 14. The apparatus 100 in FIG. 16 includes a transmitter 110, a processor 120, and a memory 130. The processor 120 controls an operation of the apparatus 100, and may be configured to process a signal. The memory 130 may include a read-only memory and a random access memory, and provide an instruction and data for the processor 120. All components of the apparatus 100 are coupled together by using a bus system 140. In addition to a data bus, the bus system 140 may further include a power bus, a control bus, and a status signal bus. However, for clarity of description, various buses are marked as the bus system 140 in the figure.

The method disclosed in the embodiments of this application may be applied to the processor 120, or may be implemented by the processor 120. In an implementation process, each step of the method may be completed by using an integrated logic circuit of hardware in the processor 120 or an instruction in a form of software. The processor 120 may be a general-purpose processor, a digital signal processor, an application-specific integrated circuit, a field programmable gate array, another programmable logic device, a discrete gate, a transistor logic device, or a discrete hardware component, and may implement or perform methods, steps, and logical block diagrams that are disclosed in the embodiments of this application. The general-purpose processor may be a microprocessor, any conventional processor, or the like. The steps of the method disclosed with reference to the embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, electrically erasable programmable memory, or a register. The storage medium is located in the memory 130, and the processor 120 reads information in the memory 130 and completes the steps of the method in combination with the hardware of the processor 120.

Specifically, the processor 120 is configured to combine a plurality of lower-order modulation signals into K higher-order modulation signals; and the transmitter 110 is configured to transmit the K higher-order modulation signals through L antennas. A higher-order modulation signal transmitted on an $i^{th}$ channel corresponding to an $m^{th}$ antenna in the L antennas and a higher-order modulation signal transmitted on a $j^{th}$ channel corresponding to an $n^{th}$ antenna are obtained by combining same lower-order modulation signals, where K is equal to 4 L is equal to 2, m and n are positive integers less than or equal to L, $m \neq n$, and i and j are positive integers.

Therefore, according to the signal transmission apparatus in this embodiment of this application, a plurality of lower-order modulation signals are combined into a plurality of higher-order modulation signals, and the plurality of higher-order modulation signals are sent through a plurality of antennas. Therefore, signal transmission space diversity is implemented, and signal transmission reliability and performance of a communications system are improved.

It should be understood that the apparatus 100 according to this embodiment of this application may be corresponding to the apparatus 10 in the embodiments of this application, and may be corresponding to an execution body of the method according to the embodiments of this application. In addition, the foregoing and other operations and/or functions of all the modules of the apparatus 100 are respectively intended to implement corresponding procedures of the method 100. For brevity, details are not described herein.

It should be understood that "one embodiment" or "an embodiment" mentioned in the entire specification means that particular features, structures, or characteristics related to the embodiment are included in at least one embodiment of this application. Therefore, "in one embodiment" or "in an embodiment" appearing throughout this specification may be not necessarily a same embodiment. Moreover, the particular features, structure or characteristics may be combined in one or more embodiments in any proper manner.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined based on functions and internal logic of the processes, and should not be construed as any limitation on the implementation processes of the embodiments of this application.

A person of ordinary skill in the art may be aware that, in combination with the examples described in the embodiments disclosed in this specification, method steps and units may be implemented by electronic hardware, computer software, or a combination thereof. To clearly describe the interchangeability between the hardware and the software, the foregoing has generally described steps and compositions of each embodiment based on functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

Methods or steps described in the embodiments disclosed in this specification may be implemented by hardware, a software program executed by a processor, or a combination thereof. The software program may be stored in a random access memory (Random Access Memory, RAM), a memory, a read-only memory (Read-Only Memory, ROM), an electrically programmable read-only memory (Electrically Programmable Read-Only Memory, EPROM), an electrically erasable programmable read-only memory (Electrically Erasable Programmable Read-Only Memory, EEPROM), a register, a hard disk, a removable magnetic disk, a compact disc read-only memory (Compact Disc Read-Only Memory, CD-ROM), or a storage medium in any other forms well-known in the technical field.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of this application may be integrated into one processing unit, or each of the units may exist alone physically, or two or more units are integrated into one unit.

This application is described in detail with reference to the accompanying drawings and in combination with the example embodiments, but this application is not limited to this. Various equivalent modifications or replacements can be made to the embodiments of this application by a person of ordinary skill in the art without departing from scope of the appended claims.

**Claims**

1. A signal transmission method, comprising:

   combining (S110) a plurality of lower-order modulation signals into K higher-order modulation signals; and
   transmitting (S120) the K higher-order modulation signals through L antennas,
   **characterized by**
   wherein K=4, and L=2; wherein the two antennas comprise a first antenna and a second antenna, the first antenna is corresponding to a first channel and a second channel, the second antenna is corresponding to the first channel and the second channel, and a higher-order modulation signal transmitted on the first channel corresponding to the first antenna and a higher-order modulation signal transmitted on the second channel corresponding to the second antenna are obtained by combining same lower-order modulation signals;
   wherein the combining (S110) a plurality of lower-order modulation signals into K higher-order modulation signals comprises:
   determining the K higher-order modulation signals based on the plurality of lower-order modulation signals and a channel matrix Q.

2. The method according to claim 1, wherein the plurality of lower-order modulation signals are corresponding to a plurality of receive end devices, and a plurality of lower-order modulation signals combined into a same higher-order modulation signal are corresponding to different receive end devices.

3. The method according to claim 1 or 2, wherein the transmitting (S120) the K higher-order modulation signals through L antennas comprises:

   performing phase shift processing on each higher-order modulation signal to obtain K phase-shifted higher-order modulation signals, wherein a phase shift factor for the phase shift processing is $e^{j\frac{\pi}{2}k}$, k is a number of each higher-order modulation signal, and $k$=1, 2, ..., and K; and

transmitting the K phase-shifted higher-order modulation signals through the L antennas.

4. The method according to claim 1 or 2, wherein the plurality of lower-order modulation signals are binary phase shift keying, BPSK, signals, and the K higher-order modulation signals are quadrature phase shift keying, QPSK, signals; and wherein the matrix Q is one of the following matrices:

$$\mathbf{Q} = \frac{1}{\sqrt{2}} \begin{bmatrix} 1 & j \\ 1 & j \end{bmatrix},$$

$$\mathbf{Q} = \frac{1}{\sqrt{2}} \begin{bmatrix} 1 & j \\ 1 & -j \end{bmatrix},$$

$$\mathbf{Q} = \frac{1}{\sqrt{2}} \begin{bmatrix} 1 & j \\ -1 & j \end{bmatrix},$$

$$\mathbf{Q} = \frac{1}{\sqrt{2}} \begin{bmatrix} 1 & j \\ -1 & -j \end{bmatrix},$$

$$\mathbf{Q} = \frac{1}{\sqrt{2}} \begin{bmatrix} 1 & -j \\ 1 & j \end{bmatrix},$$

$$\mathbf{Q} = \frac{1}{\sqrt{2}} \begin{bmatrix} 1 & -j \\ 1 & -j \end{bmatrix},$$

$$\mathbf{Q} = \frac{1}{\sqrt{2}} \begin{bmatrix} 1 & -j \\ -1 & j \end{bmatrix},$$

$$\mathbf{Q} = \frac{1}{\sqrt{2}} \begin{bmatrix} 1 & -j \\ -1 & -j \end{bmatrix},$$

$$\mathbf{Q} = \frac{1}{\sqrt{2}} \begin{bmatrix} -1 & j \\ 1 & j \end{bmatrix},$$

$$\mathbf{Q} = \frac{1}{\sqrt{2}} \begin{bmatrix} -1 & j \\ 1 & -j \end{bmatrix},$$

$$\mathbf{Q} = \frac{1}{\sqrt{2}} \begin{bmatrix} -1 & j \\ -1 & j \end{bmatrix},$$

$$\mathbf{Q} = \frac{1}{\sqrt{2}} \begin{bmatrix} -1 & j \\ -1 & -j \end{bmatrix},$$

$$Q = \frac{1}{\sqrt{2}} \begin{bmatrix} -1 & -j \\ 1 & j \end{bmatrix} \quad ,$$

$$Q = \frac{1}{\sqrt{2}} \begin{bmatrix} -1 & -j \\ 1 & -j \end{bmatrix} \quad ,$$

$$Q = \frac{1}{\sqrt{2}} \begin{bmatrix} -1 & -j \\ -1 & j \end{bmatrix} \quad ,$$

and

$$Q = \frac{1}{\sqrt{2}} \begin{bmatrix} -1 & -j \\ -1 & -j \end{bmatrix}.$$

5. The method according to claim 1 or 2, wherein the plurality of lower-order modulation signals are QPSK signals, and the K higher-order modulation signals are 16-quadrature amplitude modulation, QAM, signals; and wherein the matrix Q is one of the following matrices:

$$Q = \frac{1}{\sqrt{5}} \begin{bmatrix} 1 & 2 \\ 1 & 2 \end{bmatrix},$$

$$Q = \frac{1}{\sqrt{5}} \begin{bmatrix} 1 & 2 \\ -1 & 2 \end{bmatrix},$$

$$Q = \frac{1}{\sqrt{5}} \begin{bmatrix} 1 & 2 \\ 2 & 1 \end{bmatrix},$$

$$Q = \frac{1}{\sqrt{5}} \begin{bmatrix} 1 & 2 \\ -2 & 1 \end{bmatrix},$$

$$Q = \frac{1}{\sqrt{5}} \begin{bmatrix} -1 & 2 \\ 1 & 2 \end{bmatrix},$$

$$Q = \frac{1}{\sqrt{5}} \begin{bmatrix} -1 & 2 \\ -1 & 2 \end{bmatrix},$$

$$Q = \frac{1}{\sqrt{5}} \begin{bmatrix} -1 & 2 \\ 2 & 1 \end{bmatrix},$$

$$Q = \frac{1}{\sqrt{5}} \begin{bmatrix} -1 & 2 \\ -2 & 1 \end{bmatrix},$$

$$Q = \frac{1}{\sqrt{5}} \begin{bmatrix} 2 & 1 \\ 1 & 2 \end{bmatrix},$$

$$\mathbf{Q} = \frac{1}{\sqrt{5}} \begin{bmatrix} 2 & 1 \\ -1 & 2 \end{bmatrix},$$

$$\mathbf{Q} = \frac{1}{\sqrt{5}} \begin{bmatrix} 2 & 1 \\ 2 & 1 \end{bmatrix},$$

$$\mathbf{Q} = \frac{1}{\sqrt{5}} \begin{bmatrix} 2 & 1 \\ -2 & 1 \end{bmatrix},$$

$$\mathbf{Q} = \frac{1}{\sqrt{5}} \begin{bmatrix} -2 & 1 \\ 1 & 2 \end{bmatrix},$$

$$\mathbf{Q} = \frac{1}{\sqrt{5}} \begin{bmatrix} -2 & 1 \\ -1 & 2 \end{bmatrix},$$

$$\mathbf{Q} = \frac{1}{\sqrt{5}} \begin{bmatrix} -2 & 1 \\ 2 & 1 \end{bmatrix},$$

and

$$\mathbf{Q} = \frac{1}{\sqrt{5}} \begin{bmatrix} -2 & 1 \\ -2 & 1 \end{bmatrix}.$$

6. The method according to claim 1 or 2, wherein the plurality of lower-order modulation signals are QPSK signals, and the K higher-order modulation signals are 16-amplitude phase shift keying, APSK, signals; and wherein the matrix Q is one of the following matrices:

$$\mathbf{Q} = \frac{1}{\sqrt{2}} \begin{bmatrix} 1 & e^{j\theta} \\ 1 & e^{j\theta} \end{bmatrix},$$

$$\mathbf{Q} = \frac{1}{\sqrt{2}} \begin{bmatrix} 1 & e^{j\theta} \\ 1 & -e^{j\theta} \end{bmatrix},$$

$$\mathbf{Q} = \frac{1}{\sqrt{2}} \begin{bmatrix} 1 & e^{j\theta} \\ -1 & e^{j\theta} \end{bmatrix},$$

$$\mathbf{Q} = \frac{1}{\sqrt{2}} \begin{bmatrix} 1 & e^{j\theta} \\ -1 & -e^{j\theta} \end{bmatrix},$$

$$\mathbf{Q} = \frac{1}{\sqrt{2}} \begin{bmatrix} 1 & -e^{j\theta} \\ 1 & e^{j\theta} \end{bmatrix},$$

$$\mathbf{Q} = \frac{1}{\sqrt{2}} \begin{bmatrix} 1 & -e^{j\theta} \\ 1 & -e^{j\theta} \end{bmatrix},$$

$$\mathbf{Q} = \frac{1}{\sqrt{2}} \begin{bmatrix} 1 & -e^{j\theta} \\ -1 & e^{j\theta} \end{bmatrix} \quad ,$$

$$\mathbf{Q} = \frac{1}{\sqrt{2}} \begin{bmatrix} 1 & -e^{j\theta} \\ -1 & -e^{j\theta} \end{bmatrix},$$

$$\mathbf{Q} = \frac{1}{\sqrt{2}} \begin{bmatrix} -1 & e^{j\theta} \\ 1 & e^{j\theta} \end{bmatrix} \quad ,$$

$$\mathbf{Q} = \frac{1}{\sqrt{2}} \begin{bmatrix} -1 & e^{j\theta} \\ 1 & -e^{j\theta} \end{bmatrix} \quad ,$$

$$\mathbf{Q} = \frac{1}{\sqrt{2}} \begin{bmatrix} -1 & e^{j\theta} \\ -1 & e^{j\theta} \end{bmatrix} \quad ,$$

$$\mathbf{Q} = \frac{1}{\sqrt{2}} \begin{bmatrix} 1 & -e^{j\theta} \\ -1 & -e^{j\theta} \end{bmatrix},$$

$$\mathbf{Q} = \frac{1}{\sqrt{2}} \begin{bmatrix} -1 & -e^{j\theta} \\ 1 & e^{j\theta} \end{bmatrix} \quad ,$$

$$\mathbf{Q} = \frac{1}{\sqrt{2}} \begin{bmatrix} -1 & -e^{j\theta} \\ 1 & -e^{j\theta} \end{bmatrix} \quad ,$$

$$\mathbf{Q} = \frac{1}{\sqrt{2}} \begin{bmatrix} -1 & -e^{j\theta} \\ -1 & e^{j\theta} \end{bmatrix} \quad ,$$

and

$$\mathbf{Q} = \frac{1}{\sqrt{2}} \begin{bmatrix} -1 & -e^{j\theta} \\ -1 & -e^{j\theta} \end{bmatrix}.$$

7. The method according to claim 6, wherein a value of θ is one of the following values: $\pi/4$, $3\pi/4$, $-\pi/4$, and $-3\pi/4$.

8. A signal transmission apparatus (100), comprising:

a processor (120), configured to combine a plurality of lower-order modulation signals into K higher-order modulation signals; and
a transmitter (110), configured to transmit the K higher-order modulation signals through L antennas,
**characterized by**
wherein K=4, and L=2; wherein the two antennas comprise a first antenna and a second antenna, the first antenna is corresponding to a first channel and a second channel, the second antenna is corresponding to the first channel and the second channel, and a higher-order modulation signal transmitted on the first channel corresponding to the first antenna and a higher-order modulation signal transmitted on the second channel corresponding to the second antenna are obtained by combining same lower-order modulation signals;
wherein the processor (120) is specifically configured to:
determine the K higher-order modulation signals based on the plurality of lower-order modulation signals and a channel matrix Q.

9. The apparatus (100) according to claim 8, wherein the plurality of lower-order modulation signals are corresponding to a plurality of receive end devices, and a plurality of lower-order modulation signals combined into a same higher-order modulation signal are corresponding to different receive end devices.

10. The apparatus (100) according to claim 8 or 9, wherein the processor (120) is further configured to:

   perform phase shift processing on each higher-order modulation signal to obtain K phase-shifted higher-order modulation signals, wherein a phase shift factor for the phase shift processing is $e^{j\frac{\pi}{2}k}$, k is a number of each higher-order modulation signal, and $k=1, 2, ...,$ and K; and
   the transmitter (110) is specifically configured to transmit the K phase-shifted higher-order modulation signals through the L antennas.

11. The apparatus (100) according to claim 8 or 9, wherein the plurality of lower-order modulation signals are binary phase shift keying, BPSK, signals, and the K higher-order modulation signals are quadrature phase shift keying, QPSK, signals; and wherein the matrix Q is one of the following matrices:

$$\mathbf{Q} = \tfrac{1}{\sqrt{2}} \begin{bmatrix} 1 & j \\ 1 & j \end{bmatrix},$$

$$\mathbf{Q} = \tfrac{1}{\sqrt{2}} \begin{bmatrix} 1 & j \\ 1 & -j \end{bmatrix},$$

$$\mathbf{Q} = \tfrac{1}{\sqrt{2}} \begin{bmatrix} 1 & j \\ -1 & j \end{bmatrix},$$

$$\mathbf{Q} = \tfrac{1}{\sqrt{2}} \begin{bmatrix} 1 & j \\ -1 & -j \end{bmatrix},$$

$$\mathbf{Q} = \tfrac{1}{\sqrt{2}} \begin{bmatrix} 1 & -j \\ 1 & j \end{bmatrix},$$

$$\mathbf{Q} = \tfrac{1}{\sqrt{2}} \begin{bmatrix} 1 & -j \\ 1 & -j \end{bmatrix},$$

$$\mathbf{Q} = \tfrac{1}{\sqrt{2}} \begin{bmatrix} 1 & -j \\ -1 & j \end{bmatrix},$$

$$\mathbf{Q} = \tfrac{1}{\sqrt{2}} \begin{bmatrix} 1 & -j \\ -1 & -j \end{bmatrix},$$

$$\mathbf{Q} = \tfrac{1}{\sqrt{2}} \begin{bmatrix} -1 & j \\ 1 & j \end{bmatrix},$$

$$\mathbf{Q} = \tfrac{1}{\sqrt{2}} \begin{bmatrix} -1 & j \\ 1 & -j \end{bmatrix},$$

$$Q = \frac{1}{\sqrt{2}} \begin{bmatrix} -1 & j \\ -1 & j \end{bmatrix},$$

$$Q = \frac{1}{\sqrt{2}} \begin{bmatrix} -1 & j \\ -1 & -j \end{bmatrix},$$

$$Q = \frac{1}{\sqrt{2}} \begin{bmatrix} -1 & -j \\ 1 & j \end{bmatrix},$$

$$Q = \frac{1}{\sqrt{2}} \begin{bmatrix} -1 & -j \\ 1 & -j \end{bmatrix},$$

$$Q = \frac{1}{\sqrt{2}} \begin{bmatrix} -1 & -j \\ -1 & j \end{bmatrix},$$

and

$$Q = \frac{1}{\sqrt{2}} \begin{bmatrix} -1 & -j \\ -1 & -j \end{bmatrix}.$$

12. The apparatus (100) according to claim 8 or 9, wherein the plurality of lower-order modulation signals are QPSK signals, and the K higher-order modulation signals are 16-quadrature amplitude modulation, QAM, signals; wherein the matrix Q is one of the following matrices:

$$Q = \frac{1}{\sqrt{5}} \begin{bmatrix} 1 & 2 \\ 1 & 2 \end{bmatrix},$$

$$Q = \frac{1}{\sqrt{5}} \begin{bmatrix} 1 & 2 \\ -1 & 2 \end{bmatrix},$$

$$Q = \frac{1}{\sqrt{5}} \begin{bmatrix} 1 & 2 \\ 2 & 1 \end{bmatrix},$$

$$Q = \frac{1}{\sqrt{5}} \begin{bmatrix} 1 & 2 \\ -2 & 1 \end{bmatrix},$$

$$Q = \frac{1}{\sqrt{5}} \begin{bmatrix} -1 & 2 \\ 1 & 2 \end{bmatrix},$$

$$Q = \frac{1}{\sqrt{5}} \begin{bmatrix} -1 & 2 \\ -1 & 2 \end{bmatrix},$$

$$Q = \frac{1}{\sqrt{5}} \begin{bmatrix} -1 & 2 \\ 2 & 1 \end{bmatrix},$$

$$Q = \frac{1}{\sqrt{5}} \begin{bmatrix} -1 & 2 \\ -2 & 1 \end{bmatrix},$$

$$Q = \frac{1}{\sqrt{5}} \begin{bmatrix} 2 & 1 \\ 1 & 2 \end{bmatrix},$$

$$Q = \frac{1}{\sqrt{5}} \begin{bmatrix} 2 & 1 \\ -1 & 2 \end{bmatrix},$$

$$Q = \frac{1}{\sqrt{5}} \begin{bmatrix} 2 & 1 \\ 2 & 1 \end{bmatrix},$$

$$Q = \frac{1}{\sqrt{5}} \begin{bmatrix} 2 & 1 \\ -2 & 1 \end{bmatrix},$$

$$Q = \frac{1}{\sqrt{5}} \begin{bmatrix} -2 & 1 \\ 1 & 2 \end{bmatrix},$$

$$Q = \frac{1}{\sqrt{5}} \begin{bmatrix} -2 & 1 \\ -1 & 2 \end{bmatrix},$$

$$Q = \frac{1}{\sqrt{5}} \begin{bmatrix} -2 & 1 \\ 2 & 1 \end{bmatrix},$$

and

$$Q = \frac{1}{\sqrt{5}} \begin{bmatrix} -2 & 1 \\ -2 & 1 \end{bmatrix}.$$

13. The apparatus (100) according to claim 8 or 9, wherein the plurality of lower-order modulation signals are QPSK signals, and the K higher-order modulation signals are 16-amplitude phase shift keying, APSK, signals; wherein the matrix Q is one of the following matrices:

$$Q = \frac{1}{\sqrt{2}} \begin{bmatrix} 1 & e^{j\theta} \\ 1 & e^{j\theta} \end{bmatrix},$$

$$Q = \frac{1}{\sqrt{2}} \begin{bmatrix} 1 & e^{j\theta} \\ 1 & -e^{j\theta} \end{bmatrix},$$

$$Q = \frac{1}{\sqrt{2}} \begin{bmatrix} 1 & e^{j\theta} \\ -1 & e^{j\theta} \end{bmatrix},$$

$$Q = \frac{1}{\sqrt{2}} \begin{bmatrix} 1 & e^{j\theta} \\ -1 & -e^{j\theta} \end{bmatrix},$$

$$\mathbf{Q} = \frac{1}{\sqrt{2}} \begin{bmatrix} 1 & -e^{j\theta} \\ 1 & e^{j\theta} \end{bmatrix} \quad ,$$

$$\mathbf{Q} = \frac{1}{\sqrt{2}} \begin{bmatrix} 1 & -e^{j\theta} \\ 1 & -e^{j\theta} \end{bmatrix} \quad ,$$

$$\mathbf{Q} = \frac{1}{\sqrt{2}} \begin{bmatrix} 1 & -e^{j\theta} \\ -1 & e^{j\theta} \end{bmatrix} \quad ,$$

$$\mathbf{Q} = \frac{1}{\sqrt{2}} \begin{bmatrix} 1 & -e^{j\theta} \\ -1 & -e^{j\theta} \end{bmatrix},$$

$$\mathbf{Q} = \frac{1}{\sqrt{2}} \begin{bmatrix} -1 & e^{j\theta} \\ 1 & e^{j\theta} \end{bmatrix} \quad ,$$

$$\mathbf{Q} = \frac{1}{\sqrt{2}} \begin{bmatrix} -1 & e^{j\theta} \\ 1 & -e^{j\theta} \end{bmatrix} \quad ,$$

$$\mathbf{Q} = \frac{1}{\sqrt{2}} \begin{bmatrix} -1 & e^{j\theta} \\ -1 & e^{j\theta} \end{bmatrix} \quad ,$$

$$\mathbf{Q} = \frac{1}{\sqrt{2}} \begin{bmatrix} 1 & -e^{j\theta} \\ -1 & -e^{j\theta} \end{bmatrix},$$

$$\mathbf{Q} = \frac{1}{\sqrt{2}} \begin{bmatrix} -1 & -e^{j\theta} \\ 1 & e^{j\theta} \end{bmatrix} ,$$

$$\mathbf{Q} = \frac{1}{\sqrt{2}} \begin{bmatrix} -1 & -e^{j\theta} \\ 1 & -e^{j\theta} \end{bmatrix} ,$$

$$\mathbf{Q} = \frac{1}{\sqrt{2}} \begin{bmatrix} -1 & -e^{j\theta} \\ -1 & e^{j\theta} \end{bmatrix} ,$$

and

$$\mathbf{Q} = \frac{1}{\sqrt{2}} \begin{bmatrix} -1 & -e^{j\theta} \\ -1 & -e^{j\theta} \end{bmatrix}.$$

**Patentansprüche**

1. Verfahren zur Signalübertragung, umfassend:

   Kombinieren (S110) mehrerer Modulationssignale niedrigerer Ordnung zu **K** Modulationssignalen höherer Ordnung; und
   Übertragen (S120) der **K** Modulationssignale höherer Ordnung über **L** Antennen, **gekennzeichnet durch**

wobei **K**=4 und **L**=2; wobei die zwei Antennen eine erste Antenne und eine zweite Antenne umfassen, die erste Antenne einem ersten Kanal und einem zweiten Kanal entspricht, die zweite Antenne dem ersten Kanal und dem zweiten Kanal entspricht, und ein Modulationssignal höherer Ordnung, das auf dem ersten Kanal, der der ersten Antenne entspricht, übertragen wird, und ein Modulationssignal höherer Ordnung, das auf dem zweiten Kanal, der der zweiten Antenne entspricht, übertragen wird, durch Kombinieren gleicher Modulationssignale niedrigerer Ordnung erhalten werden;

wobei das Kombinieren (S110) von mehreren Modulationssignalen niedrigerer Ordnung zu **K** Modulationssignalen höherer Ordnung umfasst:

Bestimmen der **K** Modulationssignale höherer Ordnung basierend auf den mehreren Modulationssignalen niedrigerer Ordnung und einer Kanalmatrix **Q.**

2. Verfahren nach Anspruch 1, wobei die mehreren Modulationssignale niedrigerer Ordnung mehreren Empfangsendvorrichtungen entsprechen und mehrere Modulationssignale niedrigerer Ordnung, die zu einem gleichen Modulationssignal höherer Ordnung kombiniert sind, verschiedenen Empfangsendvorrichtungen entsprechen.

3. Verfahren nach Anspruch 1 oder 2, wobei das Übertragen (S120) der **K** Modulationssignale höherer Ordnung über **L** Antennen umfasst:

Durchführen einer Phasenverschiebungsverarbeitung an jedem Modulationssignal höherer Ordnung, um **K** phasenverschobene Modulationssignale höherer Ordnung zu erhalten, wobei ein Phasenverschiebungsfaktor für die Phasenverschiebungsverarbeitung $e^{j\frac{\pi}{2}k}$ ist, *k* eine Nummer jedes Modulationssignals höherer Ordnung ist und k = 1, 2, ..., und **K;** und

Übertragen der **K** phasenverschobenen Modulationssignale höherer Ordnung über die **L** Antennen.

4. Verfahren nach Anspruch 1 oder 2, wobei die mehreren Modulationssignale niedrigerer Ordnung BPSK-Signale ("Binary Phase Shift Keying") sind und die **K** Modulationssignale höherer Ordnung QPSK-Signale ("Quadrature Phase Shift Keying") sind, und wobei die Matrix **Q** eine der folgenden Matrizen ist:

$$\mathbf{Q} = \frac{1}{\sqrt{2}}\begin{bmatrix} 1 & j \\ 1 & j \end{bmatrix},$$

$$\mathbf{Q} = \frac{1}{\sqrt{2}}\begin{bmatrix} 1 & j \\ 1 & -j \end{bmatrix},$$

$$\mathbf{Q} = \frac{1}{\sqrt{2}}\begin{bmatrix} 1 & j \\ -1 & j \end{bmatrix},$$

$$\mathbf{Q} = \frac{1}{\sqrt{2}}\begin{bmatrix} 1 & j \\ -1 & -j \end{bmatrix},$$

$$\mathbf{Q} = \frac{1}{\sqrt{2}}\begin{bmatrix} 1 & -j \\ 1 & j \end{bmatrix},$$

$$\mathbf{Q} = \frac{1}{\sqrt{2}}\begin{bmatrix} 1 & -j \\ 1 & -j \end{bmatrix},$$

$$\mathbf{Q} = \frac{1}{\sqrt{2}}\begin{bmatrix} 1 & -j \\ -1 & j \end{bmatrix},$$

$$\mathbf{Q} = \frac{1}{\sqrt{2}}\begin{bmatrix} 1 & -j \\ -1 & -j \end{bmatrix},$$

$$\mathbf{Q} = \frac{1}{\sqrt{2}}\begin{bmatrix} -1 & j \\ 1 & j \end{bmatrix},$$

$$\mathbf{Q} = \frac{1}{\sqrt{2}}\begin{bmatrix} -1 & j \\ 1 & -j \end{bmatrix},$$

$$\mathbf{Q} = \frac{1}{\sqrt{2}}\begin{bmatrix} -1 & j \\ -1 & j \end{bmatrix},$$

$$\mathbf{Q} = \frac{1}{\sqrt{2}}\begin{bmatrix} -1 & j \\ -1 & -j \end{bmatrix},$$

$$\mathbf{Q} = \frac{1}{\sqrt{2}}\begin{bmatrix} -1 & -j \\ 1 & j \end{bmatrix},$$

$$\mathbf{Q} = \frac{1}{\sqrt{2}}\begin{bmatrix} -1 & -j \\ 1 & -j \end{bmatrix},$$

$$\mathbf{Q} = \frac{1}{\sqrt{2}}\begin{bmatrix} -1 & -j \\ -1 & j \end{bmatrix},$$

und

$$\mathbf{Q} = \frac{1}{\sqrt{2}}\begin{bmatrix} -1 & -j \\ -1 & -j \end{bmatrix}.$$

5. Verfahren nach Anspruch 1 oder 2, wobei die mehreren Modulationssignale niedrigerer Ordnung QPSK-Signale sind und die **K** Modulationssignale höherer Ordnung 16-Quadratur-Amplitudenmodulationssignale, QAM-Signale, sind; und wobei die Matrix **Q** eine der folgenden Matrizen ist:

$$\mathbf{Q} = \frac{1}{\sqrt{5}}\begin{bmatrix} 1 & 2 \\ 1 & 2 \end{bmatrix},$$

$$\mathbf{Q} = \frac{1}{\sqrt{5}}\begin{bmatrix} 1 & 2 \\ -1 & 2 \end{bmatrix},$$

$$\mathbf{Q} = \frac{1}{\sqrt{5}}\begin{bmatrix} 1 & 2 \\ 2 & 1 \end{bmatrix},$$

$$\mathbf{Q} = \frac{1}{\sqrt{5}}\begin{bmatrix} 1 & 2 \\ -2 & 1 \end{bmatrix},$$

$$\mathbf{Q} = \frac{1}{\sqrt{5}}\begin{bmatrix} -1 & 2 \\ 1 & 2 \end{bmatrix},$$

$$\mathbf{Q} = \frac{1}{\sqrt{5}}\begin{bmatrix} -1 & 2 \\ -1 & 2 \end{bmatrix},$$

$$\mathbf{Q} = \frac{1}{\sqrt{5}}\begin{bmatrix} -1 & 2 \\ 2 & 1 \end{bmatrix},$$

$$\mathbf{Q} = \frac{1}{\sqrt{5}}\begin{bmatrix} -1 & 2 \\ -2 & 1 \end{bmatrix},$$

$$\mathbf{Q} = \frac{1}{\sqrt{5}}\begin{bmatrix} 2 & 1 \\ 1 & 2 \end{bmatrix},$$

$$\mathbf{Q} = \frac{1}{\sqrt{5}}\begin{bmatrix} 2 & 1 \\ -1 & 2 \end{bmatrix},$$

$$\mathbf{Q} = \frac{1}{\sqrt{5}}\begin{bmatrix} 2 & 1 \\ 2 & 1 \end{bmatrix},$$

$$\mathbf{Q} = \frac{1}{\sqrt{5}}\begin{bmatrix} 2 & 1 \\ -2 & 1 \end{bmatrix},$$

$$\mathbf{Q} = \frac{1}{\sqrt{5}}\begin{bmatrix} -2 & 1 \\ 1 & 2 \end{bmatrix},$$

$$\mathbf{Q} = \frac{1}{\sqrt{5}}\begin{bmatrix} -2 & 1 \\ -1 & 2 \end{bmatrix},$$

$$\mathbf{Q} = \frac{1}{\sqrt{5}}\begin{bmatrix} -2 & 1 \\ 2 & 1 \end{bmatrix},$$

und

$$\mathbf{Q} = \frac{1}{\sqrt{5}}\begin{bmatrix} -2 & 1 \\ -2 & 1 \end{bmatrix}.$$

6. Verfahren gemäß Anspruch 1 oder 2, wobei die mehreren Modulationssignale niedrigerer Ordnung QPSK-Signale sind und die **K** Modulationssignale höherer Ordnung APSK-Signale (" 16-Amplitude Phase Shift Keying") sind; und wobei die Matrix Q eine der folgenden Matrizen ist:

$$\mathbf{Q} = \frac{1}{\sqrt{2}}\begin{bmatrix} 1 & e^{j\theta} \\ 1 & e^{j\theta} \end{bmatrix},$$

$$\mathbf{Q} = \frac{1}{\sqrt{2}} \begin{bmatrix} 1 & e^{j\theta} \\ 1 & -e^{j\theta} \end{bmatrix},$$

$$\mathbf{Q} = \frac{1}{\sqrt{2}} \begin{bmatrix} 1 & e^{j\theta} \\ -1 & e^{j\theta} \end{bmatrix},$$

$$\mathbf{Q} = \frac{1}{\sqrt{2}} \begin{bmatrix} 1 & e^{j\theta} \\ -1 & -e^{j\theta} \end{bmatrix},$$

$$\mathbf{Q} = \frac{1}{\sqrt{2}} \begin{bmatrix} 1 & -e^{j\theta} \\ 1 & e^{j\theta} \end{bmatrix},$$

$$\mathbf{Q} = \frac{1}{\sqrt{2}} \begin{bmatrix} 1 & -e^{j\theta} \\ 1 & -e^{j\theta} \end{bmatrix},$$

$$\mathbf{Q} = \frac{1}{\sqrt{2}} \begin{bmatrix} 1 & -e^{j\theta} \\ -1 & e^{j\theta} \end{bmatrix},$$

$$\mathbf{Q} = \frac{1}{\sqrt{2}} \begin{bmatrix} 1 & -e^{j\theta} \\ -1 & -e^{j\theta} \end{bmatrix},$$

$$\mathbf{Q} = \frac{1}{\sqrt{2}} \begin{bmatrix} -1 & e^{j\theta} \\ 1 & e^{j\theta} \end{bmatrix},$$

$$\mathbf{Q} = \frac{1}{\sqrt{2}} \begin{bmatrix} -1 & e^{j\theta} \\ 1 & -e^{j\theta} \end{bmatrix},$$

$$\mathbf{Q} = \frac{1}{\sqrt{2}} \begin{bmatrix} -1 & e^{j\theta} \\ -1 & e^{j\theta} \end{bmatrix},$$

$$\mathbf{Q} = \frac{1}{\sqrt{2}} \begin{bmatrix} 1 & -e^{j\theta} \\ -1 & -e^{j\theta} \end{bmatrix},$$

$$\mathbf{Q} = \frac{1}{\sqrt{2}} \begin{bmatrix} -1 & -e^{j\theta} \\ 1 & e^{j\theta} \end{bmatrix},$$

$$\mathbf{Q} = \frac{1}{\sqrt{2}} \begin{bmatrix} -1 & -e^{j\theta} \\ 1 & -e^{j\theta} \end{bmatrix},$$

$$\mathbf{Q} = \frac{1}{\sqrt{2}} \begin{bmatrix} -1 & -e^{j\theta} \\ -1 & e^{j\theta} \end{bmatrix},$$

und

$$\mathbf{Q} = \frac{1}{\sqrt{2}} \begin{bmatrix} -1 & -e^{j\theta} \\ -1 & -e^{j\theta} \end{bmatrix}.$$

7. Verfahren nach Anspruch 6, wobei ein Wert $\theta$ einer der folgenden Werte ist: $\pi/4$, $3\pi/4$, - $\pi/4$, and -$3\pi/4$.

8. Signalübertragungsvorrichtung (100), umfassend:

einen Prozessor (120), der dazu konfiguriert ist, mehrere Modulationssignale niedrigerer Ordnung zu **K** Modulationssignalen höherer Ordnung zu kombinieren; und
einen Sender (110), der dazu konfiguriert ist, die **K** Modulationssignale höherer Ordnung über **L** Antennen zu übertragen,
**gekennzeichnet durch**
wobei **K**=4 und **L**=2; wobei die zwei Antennen eine erste Antenne und eine zweite Antenne umfassen, die erste Antenne einem ersten Kanal und einem zweiten Kanal entspricht, die zweite Antenne dem ersten Kanal und dem zweiten Kanal entspricht, und ein Modulationssignal höherer Ordnung, das auf dem ersten Kanal, der der ersten Antenne entspricht, übertragen wird, und ein Modulationssignal höherer Ordnung, das auf dem zweiten Kanal, der der zweiten Antenne entspricht, übertragen wird, durch Kombinieren gleicher Modulationssignale niedrigerer Ordnung erhalten werden;
wobei der Prozessor (120) insbesondere dazu ausgelegt ist:
die **K** Modulationssignale höherer Ordnung basierend auf den mehreren Modulationssignalen niedrigerer Ordnung und einer Kanalmatrix **Q** zu bestimmen.

9. Vorrichtung (100) nach Anspruch 8, wobei die mehreren Modulationssignale niedrigerer Ordnung mehreren Empfangsendvorrichtungen entsprechen und mehrere Modulationssignale niedrigerer Ordnung, die zu einem gleichen Modulationssignal höherer Ordnung kombiniert sind, verschiedenen Empfangsendvorrichtungen entsprechen.

10. Vorrichtung (100) nach Anspruch 8 oder 9, wobei der Prozessor (120) ferner dazu konfiguriert ist:

eine Phasenverschiebungsverarbeitung an jedem Modulationssignal höherer Ordnung durchzuführen, um **K** phasenverschobene Modulationssignale höherer Ordnung zu erhalten, wobei ein Phasenverschiebungsfaktor für die Phasenverschiebungsverarbeitung $e^{j\frac{\pi}{2}k}$ ist, $k$ eine Nummer jedes Modulationssignals höherer Ordnung ist und $k$ = 1, 2, ..., und **K;** und
der Sender (110) insbesondere dazu konfiguriert ist, die **K** phasenverschobenen Modulationssignale höherer Ordnung über die **L** Antennen zu übertragen.

11. Vorrichtung (100) nach Anspruch 8 oder 9, wobei die mehreren Modulationssignale niedrigerer Ordnung BPSK-Signale ("Binary Phase Shift Keying") sind und die **K** Modulationssignale höherer Ordnung QPSK-Signale ("Quadrature Phase Shift Keying") sind, und wobei die Matrix **Q** eine der folgenden Matrizen ist:

$$\mathbf{Q} = \frac{1}{\sqrt{2}} \begin{bmatrix} 1 & j \\ 1 & j \end{bmatrix},$$

$$\mathbf{Q} = \frac{1}{\sqrt{2}} \begin{bmatrix} 1 & j \\ 1 & -j \end{bmatrix},$$

$$\mathbf{Q} = \frac{1}{\sqrt{2}} \begin{bmatrix} 1 & j \\ -1 & j \end{bmatrix},$$

$$\mathbf{Q} = \frac{1}{\sqrt{2}} \begin{bmatrix} 1 & j \\ -1 & -j \end{bmatrix},$$

$$Q = \frac{1}{\sqrt{2}} \begin{bmatrix} 1 & -j \\ 1 & j \end{bmatrix},$$

$$Q = \frac{1}{\sqrt{2}} \begin{bmatrix} 1 & -j \\ 1 & -j \end{bmatrix},$$

$$Q = \frac{1}{\sqrt{2}} \begin{bmatrix} 1 & -j \\ -1 & j \end{bmatrix},$$

$$Q = \frac{1}{\sqrt{2}} \begin{bmatrix} 1 & -j \\ -1 & -j \end{bmatrix},$$

$$Q = \frac{1}{\sqrt{2}} \begin{bmatrix} -1 & j \\ 1 & j \end{bmatrix},$$

$$Q = \frac{1}{\sqrt{2}} \begin{bmatrix} -1 & j \\ 1 & -j \end{bmatrix},$$

$$Q = \frac{1}{\sqrt{2}} \begin{bmatrix} -1 & j \\ -1 & j \end{bmatrix},$$

$$Q = \frac{1}{\sqrt{2}} \begin{bmatrix} -1 & j \\ -1 & -j \end{bmatrix},$$

$$Q = \frac{1}{\sqrt{2}} \begin{bmatrix} -1 & -j \\ 1 & j \end{bmatrix},$$

$$Q = \frac{1}{\sqrt{2}} \begin{bmatrix} -1 & -j \\ 1 & -j \end{bmatrix},$$

$$Q = \frac{1}{\sqrt{2}} \begin{bmatrix} -1 & -j \\ -1 & j \end{bmatrix},$$

und

$$Q = \frac{1}{\sqrt{2}} \begin{bmatrix} -1 & -j \\ -1 & -j \end{bmatrix}.$$

12. Vorrichtung (100) nach Anspruch 8 oder 9, wobei die mehreren Modulationssignale niedrigerer Ordnung QPSK-Signale sind und die K Modulationssignale höherer Ordnung 16-Quadratur-Amplitudenmodulationssignale, QAM-Signale, sind; wobei die Matrix Q eine der folgenden Matrizen ist:

$$Q = \frac{1}{\sqrt{5}} \begin{bmatrix} 1 & 2 \\ 1 & 2 \end{bmatrix},$$

$$\mathbf{Q} = \frac{1}{\sqrt{5}}\begin{bmatrix} 1 & 2 \\ -1 & 2 \end{bmatrix},$$

$$\mathbf{Q} = \frac{1}{\sqrt{5}}\begin{bmatrix} 1 & 2 \\ 2 & 1 \end{bmatrix},$$

$$\mathbf{Q} = \frac{1}{\sqrt{5}}\begin{bmatrix} 1 & 2 \\ -2 & 1 \end{bmatrix},$$

$$\mathbf{Q} = \frac{1}{\sqrt{5}}\begin{bmatrix} -1 & 2 \\ 1 & 2 \end{bmatrix},$$

$$\mathbf{Q} = \frac{1}{\sqrt{5}}\begin{bmatrix} -1 & 2 \\ -1 & 2 \end{bmatrix},$$

$$\mathbf{Q} = \frac{1}{\sqrt{5}}\begin{bmatrix} -1 & 2 \\ 2 & 1 \end{bmatrix},$$

$$\mathbf{Q} = \frac{1}{\sqrt{5}}\begin{bmatrix} -1 & 2 \\ -2 & 1 \end{bmatrix},$$

$$\mathbf{Q} = \frac{1}{\sqrt{5}}\begin{bmatrix} 2 & 1 \\ 1 & 2 \end{bmatrix},$$

$$\mathbf{Q} = \frac{1}{\sqrt{5}}\begin{bmatrix} 2 & 1 \\ -1 & 2 \end{bmatrix},$$

$$\mathbf{Q} = \frac{1}{\sqrt{5}}\begin{bmatrix} 2 & 1 \\ 2 & 1 \end{bmatrix},$$

$$\mathbf{Q} = \frac{1}{\sqrt{5}}\begin{bmatrix} 2 & 1 \\ -2 & 1 \end{bmatrix},$$

$$\mathbf{Q} = \frac{1}{\sqrt{5}}\begin{bmatrix} -2 & 1 \\ 1 & 2 \end{bmatrix},$$

$$\mathbf{Q} = \frac{1}{\sqrt{5}}\begin{bmatrix} -2 & 1 \\ -1 & 2 \end{bmatrix},$$

$$\mathbf{Q} = \frac{1}{\sqrt{5}}\begin{bmatrix} -2 & 1 \\ 2 & 1 \end{bmatrix},$$

und

$$Q = \frac{1}{\sqrt{5}} \begin{bmatrix} -2 & 1 \\ -2 & 1 \end{bmatrix}.$$

**13.** Vorrichtung (100) nach Anspruch 8 oder 9, wobei die mehreren Modulationssignale niedrigerer Ordnung QPSK-Signale sind und die K Modulationssignale höherer Ordnung APSK-Signale (" 16-Amplitude Phase Shift Keying") sind; wobei die Matrix Q eine der folgenden Matrizen ist:

$$Q = \frac{1}{\sqrt{2}} \begin{bmatrix} 1 & e^{j\theta} \\ 1 & e^{j\theta} \end{bmatrix},$$

$$Q = \frac{1}{\sqrt{2}} \begin{bmatrix} 1 & e^{j\theta} \\ 1 & -e^{j\theta} \end{bmatrix},$$

$$Q = \frac{1}{\sqrt{2}} \begin{bmatrix} 1 & e^{j\theta} \\ -1 & e^{j\theta} \end{bmatrix},$$

$$Q = \frac{1}{\sqrt{2}} \begin{bmatrix} 1 & e^{j\theta} \\ -1 & -e^{j\theta} \end{bmatrix},$$

$$Q = \frac{1}{\sqrt{2}} \begin{bmatrix} 1 & -e^{j\theta} \\ 1 & e^{j\theta} \end{bmatrix},$$

$$Q = \frac{1}{\sqrt{2}} \begin{bmatrix} 1 & -e^{j\theta} \\ 1 & -e^{j\theta} \end{bmatrix},$$

$$Q = \frac{1}{\sqrt{2}} \begin{bmatrix} 1 & -e^{j\theta} \\ -1 & e^{j\theta} \end{bmatrix},$$

$$Q = \frac{1}{\sqrt{2}} \begin{bmatrix} 1 & -e^{j\theta} \\ -1 & -e^{j\theta} \end{bmatrix},$$

$$Q = \frac{1}{\sqrt{2}} \begin{bmatrix} -1 & e^{j\theta} \\ 1 & e^{j\theta} \end{bmatrix},$$

$$Q = \frac{1}{\sqrt{2}} \begin{bmatrix} -1 & e^{j\theta} \\ 1 & -e^{j\theta} \end{bmatrix},$$

$$Q = \frac{1}{\sqrt{2}} \begin{bmatrix} -1 & e^{j\theta} \\ -1 & e^{j\theta} \end{bmatrix},$$

$$Q = \frac{1}{\sqrt{2}} \begin{bmatrix} 1 & -e^{j\theta} \\ -1 & -e^{j\theta} \end{bmatrix},$$

$$Q = \frac{1}{\sqrt{2}} \begin{bmatrix} -1 & -e^{j\theta} \\ 1 & e^{j\theta} \end{bmatrix},$$

$$\mathbf{Q} = \frac{1}{\sqrt{2}} \begin{bmatrix} -1 & -e^{j\theta} \\ 1 & -e^{j\theta} \end{bmatrix},$$

$$\mathbf{Q} = \frac{1}{\sqrt{2}} \begin{bmatrix} -1 & -e^{j\theta} \\ -1 & e^{j\theta} \end{bmatrix},$$

und

$$\mathbf{Q} = \frac{1}{\sqrt{2}} \begin{bmatrix} -1 & -e^{j\theta} \\ -1 & -e^{j\theta} \end{bmatrix}.$$

**Revendications**

1. Procédé de transmission de signal, comprenant :

   la combinaison (S110) d'une pluralité de signaux de modulation d'ordre inférieur en K signaux de modulation d'ordre supérieur ; et
   la transmission (S120) des K signaux de modulation d'ordre supérieur par l'intermédiaire de L antennes, **caractérisé par**
   dans lequel K=4, et L=2 ; dans lequel les deux antennes comprennent une première antenne et une seconde antenne, la première antenne correspond à un premier canal et à un second canal, la seconde antenne correspond au premier canal et au second canal, et un signal de modulation d'ordre supérieur transmis sur le premier canal correspondant à la première antenne et un signal de modulation d'ordre supérieur transmis sur le second canal correspondant à la seconde antenne sont obtenus en combinant des mêmes signaux de modulation d'ordre inférieur ;
   dans lequel la combinaison (S110) d'une pluralité de signaux de modulation d'ordre inférieur en K signaux de modulation d'ordre supérieur comprend :
   la détermination des K signaux de modulation d'ordre supérieur sur la base de la pluralité de signaux de modulation d'ordre inférieur et d'une matrice de canal Q.

2. Procédé selon la revendication 1, dans lequel la pluralité de signaux de modulation d'ordre inférieur correspondent à une pluralité de dispositifs d'extrémité de réception, et une pluralité de signaux de modulation d'ordre inférieur combinés en un même signal de modulation d'ordre supérieur correspondent à différents dispositifs d'extrémité de réception.

3. Procédé selon la revendication 1 ou 2, dans lequel la transmission (S120) des K signaux de modulation d'ordre supérieur par l'intermédiaire de L antennes comprend :

   la réalisation d'un traitement de déphasage sur chaque signal de modulation d'ordre supérieur pour obtenir K signaux de modulation d'ordre supérieur déphasés, dans lequel un facteur de déphasage pour le traitement de déphasage est $e^{j\frac{\pi}{2}k}$ , k est un numéro de chaque signal de modulation d'ordre supérieur, et k=1, 2, ..., et K ; et
   la transmission des K signaux de modulation d'ordre supérieur déphasés par l'intermédiaire des L antennes.

4. Procédé selon la revendication 1 ou 2, dans lequel la pluralité de signaux de modulation d'ordre inférieur sont des signaux de modulation par déplacement de phase bivalente, BPSK, et les K signaux de modulation d'ordre supérieur sont des signaux de modulation par déplacement de phase en quadrature, QPSK ; et dans lequel la matrice Q est l'une des matrices suivantes :

$$Q = \frac{1}{\sqrt{2}} \begin{bmatrix} 1 & j \\ 1 & j \end{bmatrix},$$

$$Q = \frac{1}{\sqrt{2}} \begin{bmatrix} 1 & j \\ 1 & -j \end{bmatrix},$$

$$Q = \frac{1}{\sqrt{2}} \begin{bmatrix} 1 & j \\ -1 & j \end{bmatrix},$$

$$Q = \frac{1}{\sqrt{2}} \begin{bmatrix} 1 & j \\ -1 & -j \end{bmatrix},$$

$$Q = \frac{1}{\sqrt{2}} \begin{bmatrix} 1 & -j \\ 1 & j \end{bmatrix},$$

$$Q = \frac{1}{\sqrt{2}} \begin{bmatrix} 1 & -j \\ 1 & -j \end{bmatrix},$$

$$Q = \frac{1}{\sqrt{2}} \begin{bmatrix} 1 & -j \\ -1 & j \end{bmatrix},$$

$$Q = \frac{1}{\sqrt{2}} \begin{bmatrix} 1 & -j \\ -1 & -j \end{bmatrix},$$

$$Q = \frac{1}{\sqrt{2}} \begin{bmatrix} -1 & j \\ 1 & j \end{bmatrix},$$

$$Q = \frac{1}{\sqrt{2}} \begin{bmatrix} -1 & j \\ 1 & -j \end{bmatrix},$$

$$Q = \frac{1}{\sqrt{2}} \begin{bmatrix} -1 & j \\ -1 & j \end{bmatrix},$$

$$Q = \frac{1}{\sqrt{2}} \begin{bmatrix} -1 & j \\ -1 & -j \end{bmatrix},$$

$$Q = \frac{1}{\sqrt{2}} \begin{bmatrix} -1 & -j \\ 1 & j \end{bmatrix},$$

$$Q = \frac{1}{\sqrt{2}} \begin{bmatrix} -1 & -j \\ 1 & -j \end{bmatrix},$$

$$Q = \frac{1}{\sqrt{2}} \begin{bmatrix} -1 & -j \\ -1 & j \end{bmatrix},$$

et

$$Q = \frac{1}{\sqrt{2}} \begin{bmatrix} -1 & -j \\ -1 & -j \end{bmatrix}.$$

**5.** Procédé selon la revendication 1 ou 2, dans lequel la pluralité de signaux de modulation d'ordre inférieur sont des signaux de QPSK, et les K signaux de modulation d'ordre supérieur sont des signaux de modulation d'amplitude en quadrature, QAM, 16 ; et

dans lequel la matrice Q est l'une des matrices suivantes :

$$Q = \frac{1}{\sqrt{5}} \begin{bmatrix} 1 & 2 \\ 1 & 2 \end{bmatrix},$$

$$Q = \frac{1}{\sqrt{5}} \begin{bmatrix} 1 & 2 \\ -1 & 2 \end{bmatrix},$$

$$Q = \frac{1}{\sqrt{5}} \begin{bmatrix} 1 & 2 \\ 2 & 1 \end{bmatrix},$$

$$Q = \frac{1}{\sqrt{5}} \begin{bmatrix} 1 & 2 \\ -2 & 1 \end{bmatrix},$$

$$Q = \frac{1}{\sqrt{5}} \begin{bmatrix} -1 & 2 \\ 1 & 2 \end{bmatrix},$$

$$Q = \frac{1}{\sqrt{5}} \begin{bmatrix} -1 & 2 \\ -1 & 2 \end{bmatrix},$$

$$Q = \frac{1}{\sqrt{5}} \begin{bmatrix} -1 & 2 \\ 2 & 1 \end{bmatrix},$$

$$Q = \frac{1}{\sqrt{5}} \begin{bmatrix} -1 & 2 \\ -2 & 1 \end{bmatrix}$$

$$Q = \frac{1}{\sqrt{5}} \begin{bmatrix} 2 & 1 \\ 1 & 2 \end{bmatrix},$$

$$Q = \frac{1}{\sqrt{5}} \begin{bmatrix} 2 & 1 \\ -1 & 2 \end{bmatrix},$$

$$Q = \frac{1}{\sqrt{5}} \begin{bmatrix} 2 & 1 \\ 2 & 1 \end{bmatrix},$$

$$Q = \frac{1}{\sqrt{5}} \begin{bmatrix} 2 & 1 \\ -2 & 1 \end{bmatrix}$$

$$Q = \frac{1}{\sqrt{5}}\begin{bmatrix} -2 & 1 \\ 1 & 2 \end{bmatrix},$$

$$Q = \frac{1}{\sqrt{5}}\begin{bmatrix} -2 & 1 \\ -1 & 2 \end{bmatrix},$$

$$Q = \frac{1}{\sqrt{5}}\begin{bmatrix} -2 & 1 \\ 2 & 1 \end{bmatrix},$$

et

$$Q = \frac{1}{\sqrt{5}}\begin{bmatrix} -2 & 1 \\ -2 & 1 \end{bmatrix}.$$

**6.** Procédé selon la revendication 1 ou 2, dans lequel la pluralité de signaux de modulation d'ordre inférieur sont des signaux de QPSK, et les K signaux de modulation d'ordre supérieur sont des signaux de modulation par déplacement de phase en amplitude, APSK, 16 ; et
dans lequel la matrice Q est l'une des matrices suivantes :

$$Q = \frac{1}{\sqrt{2}}\begin{bmatrix} 1 & e^{j\theta} \\ 1 & e^{j\theta} \end{bmatrix},$$

$$Q = \frac{1}{\sqrt{2}}\begin{bmatrix} 1 & e^{j\theta} \\ 1 & -e^{j\theta} \end{bmatrix},$$

$$Q = \frac{1}{\sqrt{2}}\begin{bmatrix} 1 & e^{j\theta} \\ -1 & e^{j\theta} \end{bmatrix},$$

$$Q = \frac{1}{\sqrt{2}}\begin{bmatrix} 1 & e^{j\theta} \\ -1 & -e^{j\theta} \end{bmatrix},$$

$$Q = \frac{1}{\sqrt{2}}\begin{bmatrix} 1 & -e^{j\theta} \\ 1 & e^{j\theta} \end{bmatrix},$$

$$Q = \frac{1}{\sqrt{2}}\begin{bmatrix} 1 & -e^{j\theta} \\ 1 & -e^{j\theta} \end{bmatrix},$$

$$Q = \frac{1}{\sqrt{2}}\begin{bmatrix} 1 & -e^{j\theta} \\ -1 & e^{j\theta} \end{bmatrix},$$

$$Q = \frac{1}{\sqrt{2}}\begin{bmatrix} 1 & -e^{j\theta} \\ -1 & -e^{j\theta} \end{bmatrix},$$

$$Q = \frac{1}{\sqrt{2}}\begin{bmatrix} -1 & e^{j\theta} \\ 1 & e^{j\theta} \end{bmatrix},$$

$$Q = \frac{1}{\sqrt{2}} \begin{bmatrix} -1 & e^{j\theta} \\ 1 & -e^{j\theta} \end{bmatrix},$$

$$Q = \frac{1}{\sqrt{2}} \begin{bmatrix} -1 & e^{j\theta} \\ -1 & e^{j\theta} \end{bmatrix},$$

$$Q = \frac{1}{\sqrt{2}} \begin{bmatrix} 1 & -e^{j\theta} \\ -1 & -e^{j\theta} \end{bmatrix},$$

$$Q = \frac{1}{\sqrt{2}} \begin{bmatrix} -1 & -e^{j\theta} \\ 1 & e^{j\theta} \end{bmatrix},$$

$$Q = \frac{1}{\sqrt{2}} \begin{bmatrix} -1 & -e^{j\theta} \\ 1 & -e^{j\theta} \end{bmatrix},$$

$$Q = \frac{1}{\sqrt{2}} \begin{bmatrix} -1 & -e^{j\theta} \\ -1 & e^{j\theta} \end{bmatrix},$$

et

$$Q =$$

$$\frac{1}{\sqrt{2}} \begin{bmatrix} -1 & -e^{j\theta} \\ -1 & -e^{j\theta} \end{bmatrix}.$$

7. Procédé selon la revendication 6, dans lequel une valeur de θ est l'une des valeurs suivantes : $\pi/4$, $3\pi/4$, $-\pi/4$, et $-3\pi/4$.

8. Appareil de transmission de signal (100), comprenant :

un processeur (120), configuré pour combiner une pluralité de signaux de modulation d'ordre inférieur en K signaux de modulation d'ordre supérieur ; et
un transmetteur (110), configuré pour transmettre les K signaux de modulation d'ordre supérieur par l'intermédiaire de L antennes,
**caractérisé par**
dans lequel K=4, et L=2 ; dans lequel les deux antennes comprennent une première antenne et une seconde antenne, la première antenne correspond à un premier canal et à un second canal, la seconde antenne correspond au premier canal et au second canal, et un signal de modulation d'ordre supérieur transmis sur le premier canal correspondant à la première antenne et un signal de modulation d'ordre supérieur transmis sur le second canal correspondant à la seconde antenne sont obtenus en combinant des mêmes signaux de modulation d'ordre inférieur ;
dans lequel le processeur (120) est spécifiquement configuré pour :
déterminer les K signaux de modulation d'ordre supérieur sur la base de la pluralité de signaux de modulation d'ordre inférieur et d'une matrice de canal Q.

9. Appareil (100) selon la revendication 8, dans lequel la pluralité de signaux de modulation d'ordre inférieur correspondent à une pluralité de dispositifs d'extrémité de réception, et une pluralité de signaux de modulation d'ordre inférieur combinés en un même signal de modulation d'ordre supérieur correspondent à différents dispositifs d'extrémité de réception.

10. Appareil (100) selon la revendication 8 ou 9, dans lequel le processeur (120) est en outre configuré pour :

réaliser un traitement de déphasage sur chaque signal de modulation d'ordre supérieur pour obtenir K signaux de modulation d'ordre supérieur déphasés, dans lequel un facteur de déphasage pour le traitement de déphasage est $e^{j\frac{\pi}{2}k}$ , k est un numéro de chaque signal de modulation d'ordre supérieur, et k=1, 2, ... , K ; et le transmetteur (110) est spécifiquement configuré pour transmettre les K signaux de modulation d'ordre supérieur déphasés par l'intermédiaire des L antennes.

11. Appareil (100) selon la revendication 8 ou 9, dans lequel la pluralité de signaux de modulation d'ordre inférieur sont des signaux de modulation par déplacement de phase bivalente, BPSK, et les K signaux de modulation d'ordre supérieur sont des signaux de modulation par déplacement de phase en quadrature, QPSK ; et dans lequel la matrice Q est l'une des matrices suivantes :

$$Q = \frac{1}{\sqrt{2}}\begin{bmatrix} 1 & j \\ 1 & j \end{bmatrix},$$

$$Q = \frac{1}{\sqrt{2}}\begin{bmatrix} 1 & j \\ 1 & -j \end{bmatrix},$$

$$Q = \frac{1}{\sqrt{2}}\begin{bmatrix} 1 & j \\ -1 & j \end{bmatrix},$$

$$Q = \frac{1}{\sqrt{2}}\begin{bmatrix} 1 & j \\ -1 & -j \end{bmatrix},$$

$$Q = \frac{1}{\sqrt{2}}\begin{bmatrix} 1 & -j \\ 1 & j \end{bmatrix},$$

$$Q = \frac{1}{\sqrt{2}}\begin{bmatrix} 1 & -j \\ 1 & -j \end{bmatrix},$$

$$Q = \frac{1}{\sqrt{2}}\begin{bmatrix} 1 & -j \\ -1 & j \end{bmatrix},$$

$$Q = \frac{1}{\sqrt{2}}\begin{bmatrix} 1 & -j \\ -1 & -j \end{bmatrix},$$

$$Q = \frac{1}{\sqrt{2}}\begin{bmatrix} -1 & j \\ 1 & j \end{bmatrix},$$

$$Q = \frac{1}{\sqrt{2}}\begin{bmatrix} -1 & j \\ 1 & -j \end{bmatrix},$$

$$Q = \frac{1}{\sqrt{2}}\begin{bmatrix} -1 & j \\ -1 & j \end{bmatrix},$$

$$Q = \frac{1}{\sqrt{2}}\begin{bmatrix} -1 & j \\ -1 & -j \end{bmatrix},$$

$$Q = \frac{1}{\sqrt{2}}\begin{bmatrix} -1 & -j \\ 1 & j \end{bmatrix},$$

$$Q = \frac{1}{\sqrt{2}}\begin{bmatrix} -1 & -j \\ 1 & -j \end{bmatrix},$$

$$Q = \frac{1}{\sqrt{2}}\begin{bmatrix} -1 & -j \\ -1 & j \end{bmatrix},$$

et

$$Q = \frac{1}{\sqrt{2}}\begin{bmatrix} -1 & -j \\ -1 & -j \end{bmatrix}.$$

12. Appareil (100) selon la revendication 8 ou 9, dans lequel la pluralité de signaux de modulation d'ordre inférieur sont des signaux de QPSK, et les K signaux de modulation d'ordre supérieur sont des signaux de modulation d'amplitude en quadrature, QAM, 16 ; dans lequel la matrice Q est l'une des matrices suivantes :

$$Q = \frac{1}{\sqrt{5}}\begin{bmatrix} 1 & 2 \\ 1 & 2 \end{bmatrix},$$

$$Q = \frac{1}{\sqrt{5}}\begin{bmatrix} 1 & 2 \\ -1 & 2 \end{bmatrix},$$

$$Q = \frac{1}{\sqrt{5}}\begin{bmatrix} 1 & 2 \\ 2 & 1 \end{bmatrix},$$

$$Q = \frac{1}{\sqrt{5}}\begin{bmatrix} 1 & 2 \\ -2 & 1 \end{bmatrix},$$

$$Q = \frac{1}{\sqrt{5}}\begin{bmatrix} -1 & 2 \\ 1 & 2 \end{bmatrix},$$

$$Q = \frac{1}{\sqrt{5}}\begin{bmatrix} -1 & 2 \\ -1 & 2 \end{bmatrix},$$

$$Q = \frac{1}{\sqrt{5}}\begin{bmatrix} -1 & 2 \\ 2 & 1 \end{bmatrix},$$

$$Q = \frac{1}{\sqrt{5}}\begin{bmatrix} -1 & 2 \\ -2 & 1 \end{bmatrix}$$

$$Q = \frac{1}{\sqrt{5}}\begin{bmatrix} 2 & 1 \\ 1 & 2 \end{bmatrix},$$

$$Q = \frac{1}{\sqrt{5}}\begin{bmatrix} 2 & 1 \\ -1 & 2 \end{bmatrix},$$

$$Q = \frac{1}{\sqrt{5}}\begin{bmatrix} 2 & 1 \\ 2 & 1 \end{bmatrix},$$

$$Q = \frac{1}{\sqrt{5}}\begin{bmatrix} 2 & 1 \\ -2 & 1 \end{bmatrix}$$

$$Q = \frac{1}{\sqrt{5}}\begin{bmatrix} -2 & 1 \\ 1 & 2 \end{bmatrix},$$

$$Q = \frac{1}{\sqrt{5}}\begin{bmatrix} -2 & 1 \\ -1 & 2 \end{bmatrix},$$

$$Q = \frac{1}{\sqrt{5}}\begin{bmatrix} -2 & 1 \\ 2 & 1 \end{bmatrix},$$

et

$$Q = \frac{1}{\sqrt{5}}\begin{bmatrix} -2 & 1 \\ -2 & 1 \end{bmatrix}.$$

**13.** Appareil (100) selon la revendication 8 ou 9, dans lequel la pluralité de signaux de modulation d'ordre inférieur sont des signaux de QPSK, et les K signaux de modulation d'ordre supérieur sont des signaux de modulation par déplacement de phase en amplitude, APSK, 16 ; dans lequel la matrice Q est l'une des matrices suivantes :

$$Q = \frac{1}{\sqrt{2}}\begin{bmatrix} 1 & e^{j\theta} \\ 1 & e^{j\theta} \end{bmatrix},$$

$$Q = \frac{1}{\sqrt{2}}\begin{bmatrix} 1 & e^{j\theta} \\ 1 & -e^{j\theta} \end{bmatrix},$$

$$Q = \frac{1}{\sqrt{2}}\begin{bmatrix} 1 & e^{j\theta} \\ -1 & e^{j\theta} \end{bmatrix},$$

$$Q = \frac{1}{\sqrt{2}}\begin{bmatrix} 1 & e^{j\theta} \\ -1 & -e^{j\theta} \end{bmatrix},$$

$$Q = \frac{1}{\sqrt{2}}\begin{bmatrix} 1 & -e^{j\theta} \\ 1 & e^{j\theta} \end{bmatrix},$$

$$Q = \frac{1}{\sqrt{2}} \begin{bmatrix} 1 & -e^{j\theta} \\ 1 & -e^{j\theta} \end{bmatrix},$$

$$Q = \frac{1}{\sqrt{2}} \begin{bmatrix} 1 & -e^{j\theta} \\ -1 & e^{j\theta} \end{bmatrix},$$

$$Q = \frac{1}{\sqrt{2}} \begin{bmatrix} 1 & -e^{j\theta} \\ -1 & -e^{j\theta} \end{bmatrix},$$

$$Q = \frac{1}{\sqrt{2}} \begin{bmatrix} -1 & e^{j\theta} \\ 1 & e^{j\theta} \end{bmatrix},$$

$$Q = \frac{1}{\sqrt{2}} \begin{bmatrix} -1 & e^{j\theta} \\ 1 & -e^{j\theta} \end{bmatrix},$$

$$Q = \frac{1}{\sqrt{2}} \begin{bmatrix} -1 & e^{j\theta} \\ -1 & e^{j\theta} \end{bmatrix},$$

$$Q = \frac{1}{\sqrt{2}} \begin{bmatrix} 1 & -e^{j\theta} \\ -1 & -e^{j\theta} \end{bmatrix},$$

$$Q = \frac{1}{\sqrt{2}} \begin{bmatrix} -1 & -e^{j\theta} \\ 1 & e^{j\theta} \end{bmatrix},$$

$$Q = \frac{1}{\sqrt{2}} \begin{bmatrix} -1 & -e^{j\theta} \\ 1 & -e^{j\theta} \end{bmatrix},$$

$$Q = \frac{1}{\sqrt{2}} \begin{bmatrix} -1 & -e^{j\theta} \\ -1 & e^{j\theta} \end{bmatrix},$$

et

$$Q =$$

$$\frac{1}{\sqrt{2}} \begin{bmatrix} -1 & -e^{j\theta} \\ -1 & -e^{j\theta} \end{bmatrix}.$$

FIG. 1

FIG. 2

FIG. 3

FIG. 4

FIG. 5

| Transmit end device | | Receive end device |
|---|---|---|

S110 Combine a plurality of lower-order modulation signals into K higher-order modulation signals

S120 Transmit the K higher-order modulation signals through L antennas

FIG. 6

EP 3 525 363 B1

$$x_1(m) = \alpha_1 s_1(m) + \beta_1 s_2(m)$$

$g(l)$            $g(l)$

| Channel 1 | Guard interval | Data | Guard interval |
|-----------|----------------|------|----------------|

Antenna 1

$g(l)$    $y_1(m) = \alpha_3 s_3(m) + \beta_3 s_4(m)$    $g(l)$

| Channel 2 | Guard interval | Data | Guard interval |
|-----------|----------------|------|----------------|

$g(l)$    $y_2(m) = \alpha_4 s_3(m) + \beta_4 s_4(m)$    $g(l)$

| Channel 1 | Guard interval | Data | Guard interval |
|-----------|----------------|------|----------------|

Antenna 2

$g(l)$    $x_2(m) = \alpha_2 s_1(m) + \beta_2 s_2(m)$    $g(l)$

| Channel 2 | Guard interval | Data | Guard interval |
|-----------|----------------|------|----------------|

FIG. 7

FIG. 8

$s(m)$ | $s(0)$ | $s(M-1)$ | $s(M)$ | $s(2M-1)$ | $s(2M)$ | $s(3M-1)$ | $s(3M)$ | $s(4M)$

$s_1(m)$ $s_2(m)$ $s_3(m)$ $s_4(m)$

FIG. 9

$g(l)e^{j\frac{\pi}{2}l}$ $\qquad$ $x_1(m) = (\alpha_1 s_1(m) + \beta_1 s_2(m))e^{j\frac{\pi}{2}m}$ $\qquad$ $g(l)e^{j\frac{\pi}{2}l}$

Antenna 1

Channel 1

| Guard interval | Data | Guard interval |
|---|---|---|

$g(l)e^{j\frac{\pi}{2}l}$ $\qquad$ $y_1(m) = (\alpha_3 s_3(m) + \beta_3 s_4(m))e^{j\frac{\pi}{2}m}$ $\qquad$ $g(l)e^{j\frac{\pi}{2}l}$

Channel 2

| Guard interval | Data | Guard interval |
|---|---|---|

$g(l)e^{j\frac{\pi}{2}l}$ $\qquad$ $y_2(m) = (\alpha_4 s_3(m) + \beta_4 s_4(m))e^{j\frac{\pi}{2}m}$ $\qquad$ $g(l)e^{j\frac{\pi}{2}l}$

Antenna 2

Channel 1

| Guard interval | Data | Guard interval |
|---|---|---|

$g(l)e^{j\frac{\pi}{2}l}$ $\qquad$ $x_2(m) = (\alpha_2 s_1(m) + \beta_2 s_2(m))e^{j\frac{\pi}{2}m}$ $\qquad$ $g(l)e^{j\frac{\pi}{2}l}$

Channel 2

| Guard interval | Data | Guard interval |
|---|---|---|

FIG. 10

Receive end device 1

Encoding

Modulation

$s_{11}$ $s_{12}$

Receive end device 2

Encoding

Modulation

$s_{21}$ $s_{22}$

Antenna 1

Channel 1

$g(l)$ $x_1(m) = \alpha_1 s_{11}(m) + \beta_1 s_{21}(m)$ $g(l)$

| Guard interval | Data | Guard interval |

Channel 2

$g(l)$ $y_1(m) = \alpha_3 s_{12}(m) + \beta_3 s_{22}(m)$ $g(l)$

| Guard interval | Data | Guard interval |

Antenna 2

Channel 1

$g(l)$ $y_2(m) = \alpha_4 s_{12}(m) + \beta_4 s_{22}(m)$ $g(l)$

| Guard interval | Data | Guard interval |

Channel 2

$g(l)$ $x_2(m) = \alpha_2 s_{11}(m) + \beta_2 s_{21}(m)$ $g(l)$

| Guard interval | Data | Guard interval |

FIG. 11

FIG. 12

Receive end
device 1

Encoding

Modulation

$s_1$

Receive end
device 2

Encoding

Modulation

$s_2$

Channel 1

$g(l)$      $x(m) = \alpha_1 s_1(m) + \beta_1 s_2(m)$      $g(l)$

| Guard interval | Data | Guard interval |
|---|---|---|

Channel 2

$g(l)$      $y(m) = \alpha_2 s_1(m) + \beta_2 s_2(m)$      $g(l)$

| Guard interval | Data | Guard interval |
|---|---|---|

FIG. 13

Receive end
device 1

Receive end
device 2

| Encoding |
| Modulation |

$s_1$

| Encoding |
| Modulation |

$s_2$

Channel 1

$g(l)e^{j\frac{\pi}{2}l}$    $x(m) = (\alpha_1 s_1(m) + \beta_1 s_2(m))e^{j\frac{\pi}{2}m}$    $g(l)e^{j\frac{\pi}{2}l}$

| Guard interval | Data | Guard interval |

Channel 2

$g(l)e^{j\frac{\pi}{2}l}$    $y(m) = (\alpha_2 s_1(m) + \beta_2 s_2(m))e^{j\frac{\pi}{2}m}$    $g(l)e^{j\frac{\pi}{2}l}$

| Guard interval | Data | Guard interval |

FIG. 14

Apparatus 10

Processing unit 11

Sending unit 12

FIG. 15

Apparatus 100

Transmitter
110

Processor
120

140

Memory
130

FIG. 16

**EP 3 525 363 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009116571 A1
- US 2010284491 A1

- US 2007286238 A1